# EUROPEAN PATENT APPLICATION

(11) **EP 4 560 466 A1**
(43) Date of publication of application: **28.05.2025**
(21) Application number: 23905648.4
(22) Date of filing: 28.11.2023
(51) Int. Cl.: G06F 9/451

(54) **INTERFACE RENDERING METHOD AND ELECTRONIC DEVICE**

(30) Priority: 21.12.2022 CN 202211651435
(71) Applicant: Huawei Technologies Co., Ltd., Shenzhen, Guangdong 518129 (CN)
(72) Inventor: WU, Minyan, Shenzhen, Guangdong 518129 (CN); LI, Peizhe, Shenzhen, Guangdong 518129 (CN); WU, Fan, Shenzhen, Guangdong 518129 (CN); ZENG, Lingchang, Shenzhen, Guangdong 518129 (CN)
(74) Representative: MERH-IP Matias Erny Reichl Hoffmann Patentanwälte PartG mbB
(86) International application number: PCT/CN2023/134710
(87) International publication number: WO 2024/131481

(57) **Abstract**

This application provides an interface rendering method and an electronic device. **In** the method, the electronic device displays a first interface, and the electronic device determines a first-type node and a second-type node from multiple to-be-rendered view nodes corresponding to a second interface, where the second interface is a next-frame interface of the first interface. The first-type node includes a view node that does not change before a current moment in a node classification period, and the second-type node includes a view node that changes at least once before the current moment in the node classification period. The electronic device retains, at a first layer, a control corresponding to the first-type node, and draws, at a second layer, a control corresponding to the second-type node. The electronic device generates and displays the second interface based on the first layer and the second layer. According to the solution, the electronic device does not need to draw controls corresponding to all view nodes, to reduce an operation amount of the electronic device, reduce power consumption caused by rendering, and improve rendering efficiency.

## Description

### CROSS-REFERENCE TO RELATED APPLICATIONS

This application claims priority to Chinese Patent Application No. 202211651435.3, filed with the China National Intellectual Property Administration on December 21, 2022 and entitled "INTERFACE RENDERING METHOD AND ELECTRONIC DEVICE", which is incorporated herein by reference in its entirety.

### TECHNICAL FIELD

This application relates to the field of terminal technologies, and in particular, to an interface rendering method and an electronic device.

### BACKGROUND

A view system of an electronic device may be used to create a view, and a display interface of the electronic device may include one or more views. A view tree in the view system may be used to manage and draw displayed content. One view tree includes multiple view nodes, each view node corresponds to an area or a control in the display interface, each view node generates a rendering node, and each rendering node stores a drawing command for drawing a view. A processor of the electronic device traverses the rendering node corresponding to each view node in the view tree, and executes the drawing command of each rendering node, to obtain a complete display interface through rendering.

When the display interface changes, information about the view node needs to be updated, and the drawing command of the rendering node is updated based on updated information about the view node. The processor needs to traverse all rendering nodes again, and execute an updated drawing command of each rendering node, to draw a changed display interface. However, a manner in which all the rendering nodes are traversed for drawing each frame of display interface and a drawing command of each rendering node is re-executed causes redundant power consumption and performance overheads.

### SUMMARY

This application provides an interface rendering method and an electronic device, to reduce a drawing workload of interface rendering and improve rendering efficiency.

According to a first aspect, this application provides an interface rendering method. The method may be performed by an electronic device. The method includes: The electronic device displays a first interface, where the first interface includes multiple controls corresponding to multiple view nodes. The electronic device determines multiple to-be-rendered view nodes corresponding to a second interface, where the second interface is a next-frame interface of the first interface. The electronic device determines a first-type node and a second-type node from the multiple to-be-rendered view nodes, where the first-type node includes a view node that does not change before a current moment in a node classification period, the second-type node includes a view node that changes at least once before the current moment in the node classification period, and the node classification period includes at least one view node classification operation. The electronic device retains, at a first layer, a control corresponding to the first-type node, and draws, at a second layer, a control corresponding to the second-type node. The electronic device generates the second interface based on the first layer and the second layer, and displays the second interface.

In the foregoing method, when rendering an interface, the electronic device does not need to draw controls corresponding to all view nodes, but may retain, at the first layer, a first-type node that does not change, and draw, at the second layer, only a second-type node that changes, thereby reducing an operation amount of the electronic device, reducing power consumption caused by rendering, and improving rendering efficiency.

In a possible design, a start point of the node classification period is a moment at which a quantity of second-type nodes in a previous node classification period of the node classification period is greater than a first specified threshold, or a start point of the node classification period is a moment at which a 1^{st}-frame interface is rendered in a current display scenario; and an end point of the node classification period is a moment at which a quantity of second-type nodes in the node classification period is greater than a first specified threshold.

According to this design, the electronic device may start a node classification period at a moment at which the 1^{st}-frame interface is rendered in the current display scenario, or the electronic device may end a current node classification period when a quantity of second-type nodes is greater than a first specified threshold, and start a next node classification period, to prevent an excessive quantity of second-type nodes from affecting rendering efficiency.

In a possible design, the method further includes: determining that a quantity of frames for rendering an interface after a start point of the node classification period reaches a preset quantity of frames, and performing a first operation: the first operation includes: drawing, at the first layer, a control corresponding to a view node that does not change in the interface of the preset quantity of frames, and drawing, at the second layer, a control corresponding to a view node that changes at least once in the interface of the preset quantity of frames.

According to this design, after the electronic device renders the interface of the preset quantity of frames, it may be considered that a change of the interface is relatively stable in this case, and a view node that does not change may not change in subsequent multiple frames of interfaces. Based on the foregoing design, enabling a view node classification operation in a node classification period can ensure a power consumption reduction benefit brought by the interface rendering method provided in this application.

In a possible design, the method further includes: determining that a current moment reaches a start point of the node classification period, and performing a second operation, where the second operation includes: drawing, at the first layer, controls corresponding to multiple to-be-rendered view nodes corresponding to the to-be-rendered interface at the current moment.

According to this design, after the 1^{st}-frame interface is rendered or the view node type is reset, the electronic device may "move" controls corresponding to multiple to-be-rendered view nodes to the first layer, to enable a view node classification operation in a node classification period.

In a possible design, after the retaining, at the first layer, a control corresponding to the first-type node, the method further includes: determining that a type of a target node determined by a current view node classification operation changes from the first-type node to a second-type node, and drawing an area corresponding to the target node at the first layer as a blank area or a transparent area, where the target node is any one of the multiple to-be-rendered view nodes.

According to this design, after the type of the target node changes from the first-type node to the second-type node, the electronic device does not need to retain the target node at the first layer, and the electronic device may draw an area corresponding to the target node at the first layer as blank or transparent, so as to ensure an interface display effect.

In a possible design, the generating a second interface based on the first layer and the second layer includes: determining a hierarchical relationship between the first layer and the second layer based on a current display scenario; and performing synthesis processing at the first layer and the second layer based on the hierarchical relationship between the first layer and the second layer, to generate the second interface.

According to this design, in this embodiment of this application, different display scenarios may correspond to different graph layer relationships. For example, when the display scenario is a video playback scenario, the graph layer relationships may be that the first layer is located at an upper layer, and the second layer is located at a lower layer. The electronic device may combine the multiple layers after determining the hierarchical relationship based on the display scenario, to ensure a finally obtained display effect of the interface.

In a possible design, after the determining a first-type node and a second-type node from the multiple to-be-rendered view nodes, the method further includes: adjusting a type of a view node that is in the first-type node and that causes an occlusion error to a second-type node based on an occlusion relationship between multiple controls corresponding to the multiple to-be-rendered view nodes and a hierarchical relationship between the first layer and the second layer.

This design can prevent controls on different layers from occluding each other, thereby affecting a display effect of the interface.

In a possible design, before the drawing, at the second layer, a control corresponding to a view node that changes at least once in the interface of the preset quantity of frames, the method further includes: creating the second layer, where a size of the second layer is the same as a screen size of the electronic device.

According to this design, when the first interface includes only one layer, the electronic device may create a new layer as the second layer, so as to perform different processing on different layers.

In a possible design, after the displaying the second interface, the method further includes: determining multiple to-be-rendered view nodes corresponding to a third interface, and after performing a view node classification operation on the multiple to-be-rendered view nodes corresponding to the third interface, determining that a quantity of second-type nodes in the multiple to-be-rendered view nodes corresponding to the third interface is greater than a first specified threshold, ending the node classification period, and using the third interface as a 1^{st}-frame interface of a next node classification period of the node classification period; the third interface is a next-frame interface of the second interface.

According to this design, when the quantity of the second-type nodes is greater than the first specified threshold, the electronic device may initialize a rendering process, and re-start a node classification period, so as to prevent an excessive quantity of the second-type nodes from affecting rendering efficiency.

According to a second aspect, this application provides an interface rendering method, and the method may be performed by an electronic device. The method includes: The electronic device displays a first interface, where the first interface includes multiple controls corresponding to multiple view nodes. The electronic device determines multiple to-be-rendered view nodes corresponding to a second interface, where the second interface is a next-frame interface of the first interface. The electronic device determines a first-type node and a second-type node from the multiple to-be-rendered view nodes, where the first-type node includes a view node that does not change in an interface of a first preset quantity of frames before the second interface, and the second-type node comprises a view node that changes at least once in the interface of the first preset quantity of frames before the second interface. The electronic device retains, at a first layer, a control corresponding to a first node in the first-type node, where the first node is located at the first layer in the first interface. The electronic device draws, at the second layer, a control corresponding to the second-type node. The electronic device generates the second interface based on the first layer and the second layer, and displays the second interface.

In the foregoing method, when performing the view node classification operation, the electronic device may consider a view node that changes in the interface of the first preset quantity of frames. The electronic device may use, as a first-type node, a view node that does not change in the interface of the first preset quantity of frames before the second interface, and use, as a second-type node, a view node that changes at least once in the interface of the first preset quantity of frames before the second interface. The electronic device may retain the first node in the first-type nodes at the first layer, and draw the second-type nodes at the second layer, so as to reduce an operation amount of the electronic device, reduce power consumption caused by rendering, and improve rendering efficiency.

In a possible design, the first-type node includes a second node that is located at the second layer and that is in the first interface, and before the generating the second interface based on the first layer and the second layer, the method further includes: drawing a control corresponding to the second node at the first layer.

According to this design, the electronic device may draw, at the first layer, a control corresponding to the second node, so that there is no need to redraw the view interface corresponding to the entire interface, thereby reducing a drawing amount when the electronic device renders the interface.

In a possible design, the method further includes: determining that a quantity of frames of a rendered interface in a current display scenario reaches a second preset quantity of frames, and performing a first operation, where the first operation includes: drawing, at the first layer, a control corresponding to a view node that does not change in the interface of the second preset quantity of frames, and drawing, at the second layer, a control corresponding to a view node that changes at least once in the interface of the second preset quantity of frames.

According to this design, the electronic device has rendered the interface of the second preset quantity of frames in the current display scenario. It may be considered that a change of the current interface is relatively stable, and a view node that does not change may not change in subsequent multiple frames of interfaces. Based on the foregoing design, a view node classification operation is enabled to ensure a power consumption reduction benefit brought by the interface rendering method provided in this application.

In a possible design, the method further includes: determining that a type of a target node determined by the current view node classification operation changes from a first-type node to a second-type node, and drawing an area corresponding to the target node at the first layer as a blank area or a transparent area, where the target node is any one of the multiple to-be-rendered view nodes.

According to this design, after the type of the target node changes from the first-type node to the second-type node, the electronic device does not need to retain the target node at the first layer, and the electronic device may draw an area corresponding to the target node at the first layer as blank or transparent, thereby ensuring an interface display effect.

In a possible design, the generating a second interface based on the first layer and the second layer includes: determining a hierarchical relationship between the first layer and the second layer based on a current display scenario; and performing synthesis processing at the first layer and the second layer based on the hierarchical relationship between the first layer and the second layer to generate the second interface.

According to this design, in this embodiment of this application, different display scenarios may correspond to different graph layer relationships. For example, when the display scenario is a video playback scenario, the graph layer relationships may be that the first layer is located at an upper layer, and the second layer is located at a lower layer. The electronic device may combine the multiple layers after determining the hierarchical relationship based on the display scenario, to ensure a finally obtained display effect of the interface.

In a possible design, after the determining a first-type node and a second-type node from the multiple to-be-rendered view nodes, the method further includes: adjusting a type of a view node that is in the first-type node and that causes an occlusion error to a second-type node based on an occlusion relationship between multiple controls corresponding to the multiple to-be-rendered view nodes and a hierarchical relationship between the first layer and the second layer.

This design can prevent controls on different layers from occluding each other, thereby affecting a display effect of the interface.

In a possible design, before the drawing, at the second layer, a control corresponding to a view node that changes at least once in the interface of the second preset quantity of frames, the method further includes: creating the second layer, where a size of the second layer is the same as a screen size of the electronic device.

According to this design, when the first interface includes only one layer, the electronic device may create a new layer as the second layer, so as to perform different processing on different layers.

According to a third aspect, this application provides an interface rendering method, and the method may be performed by an electronic device. The method includes: The electronic device displays electronic device, a first interface, where the first interface includes multiple controls corresponding to multiple view nodes. The electronic device determines multiple to-be-rendered view nodes corresponding to a second interface, where the second interface is a next-frame interface of the first interface. The electronic device determines a first-type node and a second-type node from the multiple to-be-rendered view nodes, where the first-type node includes a view node that does not change in the multiple to-be-rendered view nodes relative to the multiple view nodes of the first interface, the second-type node includes a view node that changes in the to-be-rendered view nodes relative to the multiple view nodes of the first interface; retains, at a first layer, a control corresponding to a first node in the first-type node, where the first node is located at the first layer in the first interface. The electronic device draws, at the second layer, a control corresponding to the second-type node. The electronic device generates the second interface based on the first layer and the second layer, and displays the second interface.

In the foregoing method, when performing a view node classification operation, the electronic device may consider a view node that changes between two adjacent frames of interfaces. The electronic device may use a view node that does not change in the second interface relative to the first interface as a first-type node, and use a view node that changes in the second interface relative to the first interface as a second-type node. The electronic device may retain the first node in the first-type nodes at the first layer, and draw the second-type nodes at the second layer, so as to reduce an operation amount of the electronic device, reduce power consumption caused by rendering, and improve rendering efficiency.

In a possible design, the first-type node includes a second node that is located at the second layer and that is in the first interface, and before the generating the second interface based on the first layer and the second layer, the method further includes: drawing a control corresponding to the second node at the first layer.

According to this design, the electronic device may draw, at the first layer, a control corresponding to the second node, so that there is no need to redraw the view interface corresponding to the entire interface, thereby reducing a drawing amount when the electronic device renders the interface.

In a possible design, after the retaining, at the first layer, a control corresponding to the first node, the method further includes: determining that a type of a target node determined by a current view node classification operation changes from a first-type node to a second-type node, and drawing an area corresponding to the target node at the first layer as a blank area or a transparent area, where the target node is any one of the multiple to-be-rendered view nodes.

According to this design, after the type of the target node changes from the first-type node to the second-type node, the electronic device does not need to retain the target node at the first layer, and the electronic device may draw an area corresponding to the target node at the first layer as blank or transparent, thereby ensuring an interface display effect.

In a possible design, the generating a second interface based on the first layer and the second layer includes: determining a hierarchical relationship between the first layer and the second layer based on a current display scenario; and performing synthesis processing at the first layer and the second layer based on the hierarchical relationship between the first layer and the second layer to generate the second interface.

According to this design, in this embodiment of this application, different display scenarios may correspond to different graph layer relationships. For example, when the display scenario is a video playback scenario, the graph layer relationships may be that the first layer is located at an upper layer, and the second layer is located at a lower layer. The electronic device may combine the multiple layers after determining the hierarchical relationship based on the display scenario, to ensure a finally obtained display effect of the interface.

In a possible design, after the determining a first-type node and a second-type node from the multiple to-be-rendered view nodes, the method further includes: adjusting a type of a view node that is in the first-type node and that causes an occlusion error to a second-type node based on an occlusion relationship between multiple controls corresponding to the multiple to-be-rendered view nodes and a hierarchical relationship between the first layer and the second layer.

This design can prevent controls on different layers from occluding each other, thereby affecting a display effect of the interface.

In a possible design, before the drawing, at the second layer, a control corresponding to the second-type node, the method further includes: creating the second layer, where a size of the second layer is the same as a screen size of the electronic device.

According to this design, when the first interface includes only one layer, the electronic device may create a new layer as the second layer, so as to perform different processing on different layers.

According to a fourth aspect, this application further provides an interface rendering method, and the method may be performed by an electronic device. The method includes: The electronic device displays a first interface, where the first interface includes multiple controls corresponding to multiple view nodes; and determines multiple to-be-rendered view nodes corresponding to a second interface, where the second interface is a next-frame interface of the first interface; determines a first-type node and a second-type node from the multiple to-be-rendered view nodes, where the first-type node includes a view node that does not change before a current moment in a node classification period, the second-type node includes a view node whose drawing instruction changes at least once before the current moment in the node classification period, and the node classification period includes at least one view node classification operation; retains, at a first layer, a control corresponding to the first-type node, and draws, at a second layer, a control corresponding to the second-type node; generates the second interface based on the first layer and the second layer, and displays the second interface.

In the foregoing method, when the display scenario of the electronic device is the sliding display scenario, the electronic device may retain, at the first layer, the first-type node that does not change, and draw, at the second layer, the second-type node whose drawing instruction changes, thereby reducing a drawing amount when the electronic device renders one frame of interface, and improving rendering efficiency.

In a possible design, the method further includes: determining a third-type node from the multiple to-be-rendered view nodes, where the third-type node includes a view node whose drawing instruction does not change and whose display location changes before the first view node classification operation is performed within the node classification period; and retaining a control corresponding to the third-type node at a third layer, determining a sliding distance based on a first operation triggered by a user, and adjusting a location of the third layer based on the sliding distance;
the generating the second interface based on the first layer and the second layer includes: generating the second interface based on the first layer, the second layer, and the third layer whose location has been adjusted.

According to this design, the electronic device may retain, at the third layer, a third-type node whose drawing instruction does not change but whose display location changes in the interface, and adjust a location of the third layer according to a sliding operation of the user, thereby further reducing a drawing workload.

In a possible design, a start point of the node classification period is a moment at which a quantity of second-type nodes in a previous node classification period of the node classification period is greater than a first specified threshold, or a start point of the node classification period is a moment at which a 1^{st}-frame interface is rendered in a current display scenario, or a start point of the node classification period is a moment at which a ratio of a visible area to a screen at a third layer after location adjustment is less than a second specified threshold in the previous node classification period of the node classification period; an end point of the node classification period is a moment at which a quantity of second-type nodes in the node classification period is greater than a first specified threshold, or an end point of the node classification period is a moment at which a ratio of a visible area to a screen in the third layer after the location adjustment is less than a second specified threshold in the node classification period.

According to this design, when the quantity of the second-type nodes is greater than the first specified threshold, the electronic device may end a current node classification period and start a next node classification period, so as to prevent an excessive quantity of the second-type nodes from affecting rendering efficiency. When the ratio of the visible area to the screen at the third layer is less than the second specified threshold, the electronic device may end a current node classification period and start a next node classification period, so as to prevent rendering efficiency from being affected due to an excessive quantity of nodes that need to be redrawn.

In a possible design, the method further includes: determining that a current moment reaches a start point of the node classification period, and performing a first operation, where the first operation includes: drawing controls corresponding to multiple to-be-rendered view nodes corresponding to a third interface at the third layer, where the third interface is a 1^{st}-frame interface of the node classification period; and determining multiple to-be-rendered view nodes corresponding to a fourth interface, and performing a second operation, where the fourth interface is a next-frame interface of the third interface; the second operation includes: drawing, at the first layer, a view node that does not change compared with the third interface and that is among the multiple to-be-rendered view nodes corresponding to the fourth interface, and drawing, at the second layer, a view node that is changed compared with the third interface drawing instruction and that is among the multiple to-be-rendered view nodes corresponding to the fourth interface; and, retaining, at the third layer, a view node, which is in the multiple to-be-rendered view nodes corresponding to the fourth interface and whose display location is not changed compared with that of the third interface drawing instruction, and whose display location is changed.

According to this design, after rendering the first interface or resetting the view node type, the electronic device may separately retain controls corresponding to the multiple view nodes to the third layer, or "move" controls to the first layer and the second layer, to enable a view node classification operation in a node classification period.

In a possible design, the determining a sliding distance based on a first operation triggered by a user includes: obtaining a first location of a sliding control in multiple controls corresponding to the multiple to-be-rendered view nodes at a first moment, and obtaining a second location of the sliding control at a second moment, where the first moment is a moment at which the electronic device detects that the first operation starts, and the second moment is a moment at which the electronic device detects that the first operation ends; and determining the sliding distance based on the first location and the second location.

According to this design, the electronic device may determine, based on the location of the sliding control, the sliding distance for triggering the sliding operation by the user, so as to accurately adjust the location of the third layer based on the sliding distance, thereby ensuring a display effect.

In a possible design, after the retaining, at the first layer, a control corresponding to the first-type node, the method further includes: determining that a type of a target node determined by a current view node classification operation changes from the first-type node to a second-type node, and drawing an area corresponding to the target node at the first layer as a blank area or a transparent area, where the target node is any one of the multiple to-be-rendered view nodes.

According to this design, after the type of the target node changes from the first-type node to the second-type node, the electronic device does not need to retain the target node at the first layer, and the electronic device may draw an area corresponding to the target node at the first layer as blank or transparent, thereby ensuring an interface display effect.

In a possible design, the generating the second interface based on the first layer, the second layer, and the third layer includes: determining a hierarchical relationship between the first layer, the second layer, and the third layer according to a current display scenario; and performing synthesis processing at the first layer, the second layer, and the third layer based on the hierarchical relationship between the first layer, the second layer, and the third layer to generate the second interface.

According to this design, in this embodiment of this application, different display scenarios may be corresponding to different graph layer relationships. For example, when the display scenario is a sliding document display scenario, the graph layer relationships may be that the first layer is located at the top layer, the third layer is located at the middle layer, and the second layer is located at the bottom layer. The electronic device may combine the multiple layers after determining the hierarchical relationship based on the display scenario, to ensure a finally obtained display effect of the interface.

In a possible design, after the determining a first-type node, a second-type node, and a third-type node from the multiple to-be-rendered view nodes, the method further includes: adjusting, based on an occlusion relationship between multiple controls corresponding to the multiple to-be-rendered view nodes and a hierarchical relationship between the first layer, the second layer, and the third layer, a type of a view node that causes an occlusion error in the first-type nodes to a second-type node, and adjusting a view node that causes an occlusion error in the three types of nodes to a second-type node.

This design can prevent controls on different layers from occluding each other, thereby affecting a display effect of the interface.

In a possible design, before the drawing, at the second layer, a view node that is in the multiple to-be-rendered view nodes corresponding to the fourth interface and that is changed compared with the third interface drawing instruction, the method further includes: creating the second layer, where a size of the second layer is the same as a screen size of the electronic device.

According to this design, when the first interface includes only one layer, the electronic device may create a new layer as the second layer, so as to perform different processing on different layers.

In a possible design, after the displaying the second interface, the method further includes: after determining multiple to-be-rendered view nodes corresponding to the fifth interface, and performing a node classification operation on the multiple to-be-rendered view nodes corresponding to the fifth interface, determining that a quantity of second-type nodes in the multiple to-be-rendered view nodes corresponding to the fifth interface is greater than a first specified threshold, or determining that a ratio of a visible area at a third layer after a location is adjusted in the fifth interface to a screen is less than a second specified threshold, ending the node classification period, and using the fifth interface as a 1^{st}-frame interface of a next node classification period of the node classification period, where the fifth interface is a next-frame interface of the second interface.

According to this design, when the quantity of the second-type nodes is greater than the first specified threshold, or the ratio of the visible area at the third layer to the screen is less than the second specified threshold, the electronic device may initialize a rendering task, to start a new node classification period, so as to prevent rendering efficiency from being affected by excessive content that needs to be drawn at the second layer.

According to a fifth aspect, this application provides an electronic device, where the electronic device includes multiple function modules, and the multiple function modules interact with each other to implement the method performed by the electronic device in the first aspect and the implementations of the first aspect. The multiple function modules may be implemented based on software, hardware, or a combination of software and hardware, and the multiple function modules may be randomly combined or divided based on specific implementation.

According to a sixth aspect, this application provides an electronic device, including at least one processor and at least one memory, where the at least one memory stores computer program instructions, and when the electronic device runs, the at least one processor performs the method performed by the electronic device in the first aspect and the implementations of the first aspect.

According to a seventh aspect, this application further provides a computer-readable storage medium, where the computer-readable storage medium stores a computer program, and when the computer program is executed by a computer, the computer is enabled to perform the method performed by the electronic device in any one of the foregoing aspects and the implementations of the foregoing aspects.

According to an eighth aspect, this application further provides a chip, where the chip is configured to read a computer program stored in a memory, to perform the method performed by the electronic device in any one of the foregoing aspects and the implementations of the foregoing aspect.

According to a ninth aspect, this application further provides a chip system. The chip system includes a processor, configured to support a computer apparatus in implementing the method performed by the electronic device in any one of the foregoing aspects and the implementations of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of a structure of an electronic device according to an embodiment of this application;
FIG. 2 is a block diagram of a software architecture of an electronic device according to an embodiment of this application;
FIG. 3 is a diagram of a short video playback interface according to an embodiment of this application;
FIG. 4 is a diagram of a structure of a view node according to an embodiment of this application;
FIG. 5 is a diagram of a layer according to an embodiment of this application;
FIG. 6A to FIG. 6C are a diagram of a video playback interface according to an embodiment of this application;
FIG. 7 is a flowchart of an interface rendering method according to an embodiment of this application;
FIG. 8A to FIG. 8C are a diagram of a video playback interface according to an embodiment of this application;
FIG. 9 is a flowchart of an interface rendering method according to an embodiment of this application;
FIG. 10A and FIG. 10B are a diagram of a social platform interface according to an embodiment of this application;
FIG. 11A to FIG. 11C are a diagram of a document display interface according to an embodiment of this application; and
FIG. 12 is a flowchart of an interface rendering method according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "multiple" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of multiple items. For example, at least one of a, b, or c may represent: a, b, c, a and b, a and c, b and c, or a, b and c, where a, b, and c may be a singular or plural number.

The view system of the electronic device may be configured to create a view. The display interface of the electronic device may include one or more views. The view may also be referred to as a control. For example, the control may include a button, a bubble, or the like in the display interface. The view tree in the view system can be used to manage and draw the displayed content. One view tree includes multiple view nodes, each view node corresponds to an area or a control in the display interface, each view node generates a rendering node, and each rendering node stores a drawing command for drawing a view. The processor of the electronic device traverses a rendering node corresponding to each view node in the view tree, to execute a drawing command of each rendering node, so as to obtain a complete display interface through rendering.

When the display interface changes, the processor needs to update the information about the view node, and update the drawing command of the rendering node based on the updated information about the view node. The processor needs to traverse all the rendering nodes again, and execute an updated drawing command of each rendering node, to draw the changed display interface. However, in an interface displayed on the electronic device, some same controls may exist between two frames. When drawing each frame of display interface, the processor re-executes a drawing command of each rendering node, which causes redundant power consumption and performance overheads.

Based on the foregoing problem, an embodiment of this application provides an interface rendering method. The method may be performed by an electronic device. Specifically, the method may be performed by a processor in the electronic device. In the method, an electronic device displays a first interface, where the first interface includes multiple controls corresponding to multiple view nodes; and the electronic device determines multiple to-be-rendered view nodes corresponding to a second interface each time before rendering a next-frame interface, where the second interface is a next-frame interface of the first interface. The electronic device determines a first-type node and a second-type node from multiple to-be-rendered view nodes, the electronic device retains, at the first layer, a control corresponding to the first-type node, and the electronic device draws, at the second layer, a control corresponding to the second-type node. The first-type node may include a node that does not change, and the second-type node may include a node that changes. The electronic device may determine, based on a current display scenario, a manner of dividing the first-type node and the second-type node. According to the foregoing method, when rendering an interface, the electronic device does not need to redraw all controls in the interface after traversing all view nodes, but only needs to redraw a changed control, thereby reducing an operation amount of the electronic device, improving rendering efficiency, and reducing rendering power consumption.

The following describes the electronic device, and the embodiments for using such an electronic device. The electronic device in embodiments of this application may be a tablet computer, a mobile phone, a vehicle-mounted device, an augmented reality (augmented reality, AR)/virtual reality (virtual reality, VR) device, a notebook computer, or an ultra-mobile personal computer (ultra-mobile personal computer, UMPC), a netbook, a personal digital assistant (personal digital assistant, PDA), a wearable device, or the like. A specific type of the electronic device is not limited in embodiments of this application.

In some embodiments of this application, the electronic device may alternatively be a portable terminal device that further includes another function, for example, a personal digital assistant function and/or a music player function. An example embodiment of the portable terminal device includes but is not limited to a portable terminal device using iOS^{®}, Android^{®}, Microsoft^{®}, Harmony^{®}, or another operating system.

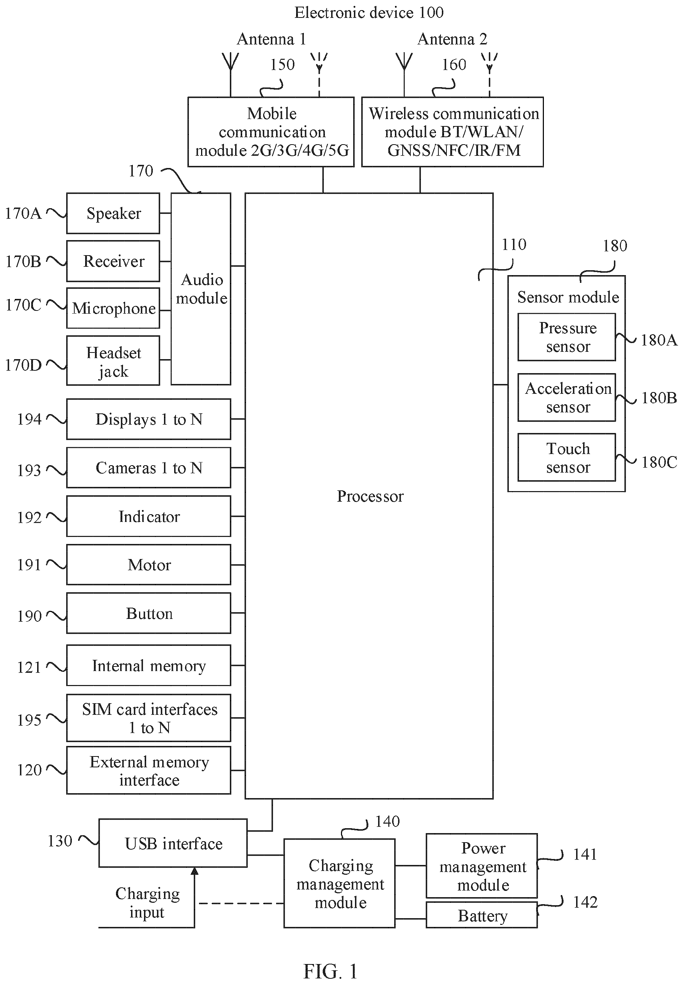

FIG. 1 is a diagram of a structure of an electronic device 100 according to an embodiment of this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control over instruction fetching and instruction execution. A memory may be further disposed in the processor 110, and is configured to store instructions and data. In some embodiments, the memory in the processor 110 is a high-speed cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, quantum dot light-emitting diodes (quantum dot light emitting diodes, QLED), or the like. In some embodiments, the electronic device 100 may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application program, and the like. The data storage area may store data (for example, a captured image or a recorded video) and the like generated when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The external memory interface 120 may be configured to connect to an external memory card, such as a micro SD card, to extend a storage capability of the electronic device. The external memory card communicates with the processor 110 through the external memory interface 120, to implement a data storage function. For example, files such as images or videos are stored in the external storage card.

The electronic device 100 may implement an audio function, for example, music playing and recording, through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a touch panel. The touch sensor 180C may be disposed on the display 194, and the touch sensor 180C and the display 194 constitute a touchscreen, which is also referred to as a "touch screen". The touch sensor 180C is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180C may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. A touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It can be understood that the components shown in FIG. 1 do not constitute a specific limitation on the electronic device 100. The electronic device may further include more or fewer components than those shown in the figure, or combine some components, or split some components, or have different component arrangements. In addition, a combination/connection relationship between the components in FIG. 1 may also be adjusted and modified.

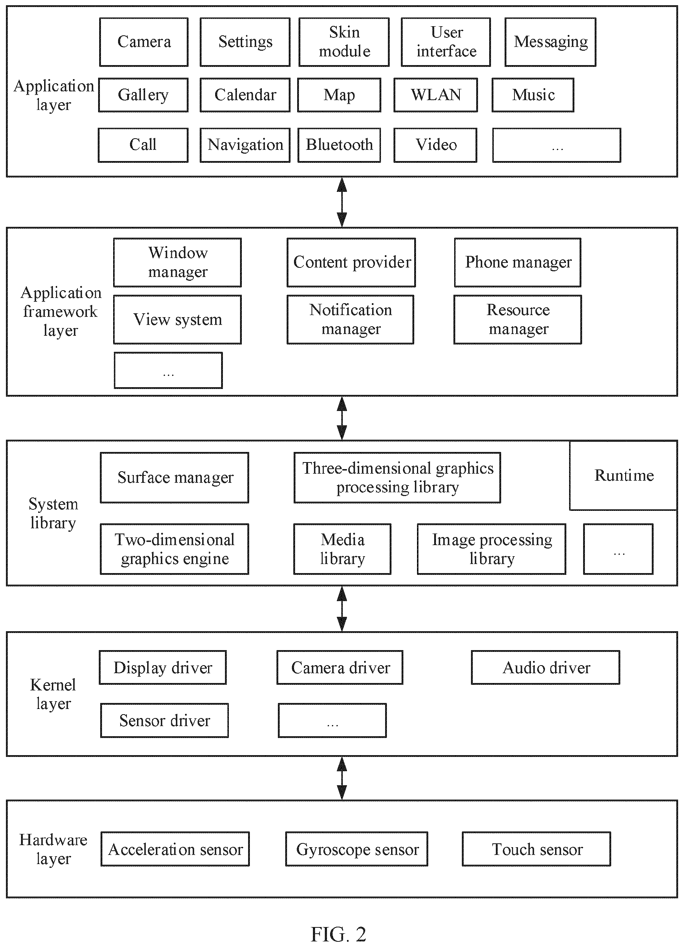

FIG. 2 is a block diagram of a software architecture of an electronic device according to an embodiment of this application. As shown in FIG. 2, the software structure of the electronic device may be a layered architecture. For example, software may be divided into several layers, and each layer has a clear role and responsibility. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application package). As shown in FIG. 2, the application layer may include Camera, Settings, a skin module, a user interface (user interface, UI), a third-party application, and the like. The third-party application may include Gallery, Calendar, Phones, Maps, Navigation, WLAN, Bluetooth, Music, Videos, Messages, and the like. In this embodiment of this application, the application program layer may include the target installation package that is of the target application and that the electronic device requests to download from the server, and the function file and the layout file in the target installation package are adapted to the electronic device.

The application framework layer provides an application programming interface (application programming interface, API) and a programming framework for an application at the application layer. The application framework layer may include some predefined functions. As shown in FIG. 2, the application framework layer may include a window manager, a content provider, a view system, a phone manager, a resource manager, and a notification manager.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view. In this embodiment of this application, the electronic device may draw different controls at different layers, for example, retain a control that does not change in an interface at a first layer, and draw a changed control at a second layer, so as to reduce a drawing workload of the electronic device when switching to a next-frame interface, and improve interface rendering efficiency.

The phone manager is configured to provide a communication function of the electronic device, for example, management of a call status (including answering, hanging up, or the like).

The resource manager provides various resources for an application such as a localized character string, an icon, an image, a layout file, and a video file.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, an electronic device vibrates, or an indicator light blinks.

A runtime includes a core library and a virtual machine. The runtime is responsible for scheduling and managing an operating system.

The kernel library includes two parts: One part is a performance function that needs to be invoked by the Java language, and the other part is a kernel library of the operating system. The application layer and the application framework layer run on the virtual machine. The virtual machine executes Java files of the application layer and the application framework layer as binary files. The virtual machine is configured to implement functions such as object life cycle management, stack management, thread management, security and exception management, and garbage collection.

The system library may include multiple functional modules, for example, a surface manager (surface manager), a media library (media libraries), a three-dimensional graphics processing library (for example, OpenGL ES), a two-dimensional graphics engine (for example, SGL), and an image processing library.

The surface manager is configured to manage a display subsystem and provide fusion of 2D and 3D layers for multiple applications.

The media library supports playback and recording in multiple commonly used audio and video formats, and static image files. The media library may support multiple audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gyroscope sensor, and a touch sensor.

It should be noted that the structures shown in FIG. 1 and FIG. 2 are merely examples of the electronic device provided in embodiments of this application, and cannot impose any limitation on the electronic device provided in embodiments of this application. In specific implementation, the electronic device may have more or fewer components or modules than those in the structures shown in FIG. 1 or FIG. 2.

The following describes methods provided in embodiments of this application.

First, an interface rendering procedure of an electronic device in embodiments of this application and related terms are described.

Before displaying any interface on the display, the electronic device needs to render the interface. Each interface may include one or more views. For example, one interface may include a view corresponding to an application icon, a view corresponding to a text, a view corresponding to a picture, and the like. The view may also be referred to as a control. The electronic device may draw a control on the layer according to multiple view nodes corresponding to the interface, and each view node may include information such as a drawing instruction and a display location of the control.

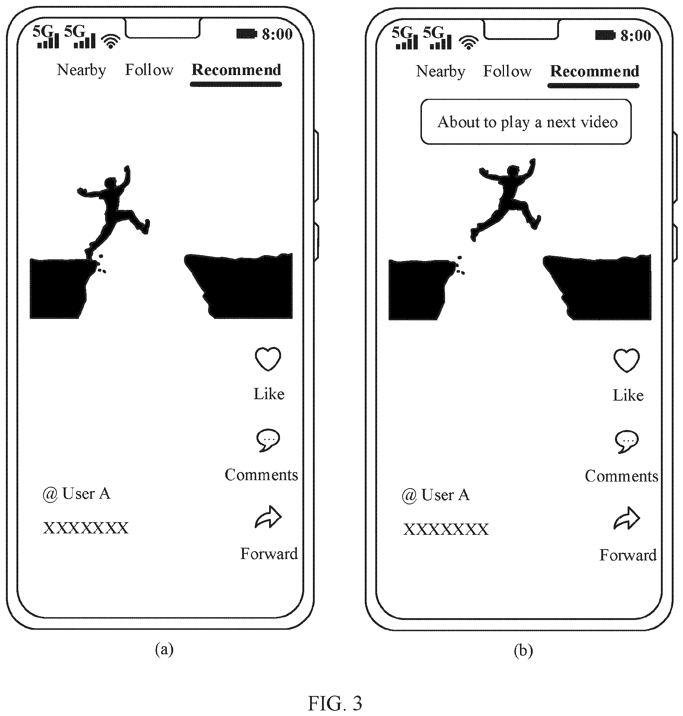

Each time before rendering an interface, the electronic device may determine multiple to-be-rendered view nodes corresponding to the interface. When an interface is switched, a view node may be added, or a view node may change, and a control displayed in the interface also changes. For example, FIG. 3 is a diagram of a short video playback interface according to an embodiment of this application. (a) in FIG. 3 and (b) in FIG. 3 are two frames of interfaces for displaying a short video by the electronic device. When the electronic device displays the interface shown in (a) in FIG. 3 to the interface shown in (b) in FIG. 3, button controls such as "like" and "forward" in the interface do not change, but a control of short video content in the interface changes, and a text control "about to play a next video" is added to the interface.

In this embodiment of this application, before rendering the interface, the electronic device may classify multiple to-be-rendered view nodes corresponding to the interface, for example, divide the multiple to-be-rendered view nodes into a changed node and an unchanged node. The electronic device may retain, at one layer, a control corresponding to a view node that does not change, and redraw, at another layer, a control corresponding to a changed node, thereby reducing a drawing workload of the electronic device and reducing rendering power consumption.

The following separately describes multiple embodiments of an interface rendering method provided in embodiments of this application. It should be noted that the following embodiments separately provide multiple manners of dividing a layer and dividing a view node. In specific implementation, the electronic device may select at least one of the manners based on a display scenario to render an interface. The display scenario may include, for example, a video display scenario, a sliding display scenario, and the like.

### Embodiment 1

The electronic device displays a first interface, where the first interface includes multiple controls corresponding to multiple view nodes. The electronic device updates multiple view nodes each time before rendering a next-frame interface, and controls corresponding to the multiple updated view nodes constitute the next-frame interface. For example, if a next-frame interface of the first interface is the second interface, controls corresponding to the multiple updated view nodes constitute the second interface. It may be understood that, in a display scenario, the electronic device needs to render multiple frames of interfaces, for example, in a video playback scenario, in a video playback process, the electronic device updates the view node for multiple times based on display content and an operation triggered by the user, and the electronic device draws one frame of interface based on the view node obtained after each update.

The electronic device may determine multiple to-be-rendered view nodes corresponding to the second interface, and determine a first-type node and a second-type node from the multiple to-be-rendered view nodes. The first-type node includes a view node that does not change before a current moment in one node classification period, and the second-type node includes a view node that changes at least once before the current moment in the node classification period. The current moment is a moment at which multiple to-be-rendered view nodes in the second interface are determined.

Optionally, in this embodiment of this application, one node classification period includes at least one view node classification operation. In one node classification period, the electronic device may perform at least one view node classification operation based on the foregoing view node classification operation manner.

In this embodiment of this application, a start point of a node classification period may be a moment at which a quantity of second-type nodes in a previous node classification period is greater than a first specified threshold, or a start point of a node classification period may be a moment at which a 1^{st}-frame interface is rendered in a current display scenario. An end point of a node classification period may be a moment at which a quantity of second-type nodes is greater than a first specified threshold. It can be learned from the foregoing view node classification method that, in this embodiment of this application, a second-type node in a node classification period is an accumulation process. When a quantity of second-type nodes is greater than a first specified threshold, a current node classification period may be ended and a next node classification period may be started, so as to prevent an excessive quantity of second-type nodes from affecting rendering efficiency.

Optionally, assuming that in a node classification period, the electronic device determines that a quantity of second-type nodes in the multiple to-be-rendered view nodes corresponding to the third interface is greater than a first specified threshold, the electronic device may use the third interface as a 1^{st}-frame interface of a next node classification period.

In an optional implementation, when a quantity of frames for rendering an interface reaches a preset quantity of frames after the electronic device determines the start point of the node classification period, the electronic device may perform a first operation. The first operation may include: drawing, at a first layer, a control corresponding to a view node that does not change in the interface of the preset quantity of frames, and drawing, at a second layer, a control corresponding to a view node that changes at least once in the interface of the preset quantity of frames. By performing the first operation, the electronic device may separately "move" controls corresponding to the multiple view nodes to two layers. The first operation may also mean that the electronic device resets types of multiple to-be-rendered nodes in a target interface, where the target interface is a 1^{st} interface after an interface of a preset quantity of frames. That the electronic device performs the first operation may be considered as resetting, to a first-type node, a type of a view node that does not change in the interface of the preset quantity of frames and that is in the multiple to-be-rendered nodes, and resetting, to a second-type node, a type of a view node that changes at least once in the interface of the preset quantity of frames and that is in the multiple to-be-rendered nodes.

For example, a value of the preset quantity of frames may be 16. In this case, after 16 frames of interfaces are rendered within a node classification period, when rendering a 17^{th}-frame interface, the electronic device may draw, at the first layer, a view node that does not change in the 16 frames of interfaces, and draw, at the second layer, a node that changes at least once in the 16 frames of interfaces. After the electronic device completes the foregoing operation, the electronic device may perform a view interface classification operation on the to-be-rendered view node corresponding to the 18^{th} frame interface. After the electronic device renders the interface of the preset quantity of frames, it may be considered that an interface changes relatively stably in this case, and a view node that does not change may not change in subsequent multiple frames of interfaces. Therefore, enabling a view node classification operation in one node classification period based on the foregoing solution can ensure a power consumption reduction benefit brought by the interface rendering method provided in this application.

In another optional implementation, when the electronic device determines that the current moment reaches the start point of the node classification period, the electronic device may perform a second operation. The second operation may include: drawing, at the first layer, controls corresponding to the multiple to-be-rendered view nodes corresponding to the to-be-rendered interface at the current moment. By performing the second operation, the electronic device may draw all the multiple view nodes at the first layer, to enable a view node classification operation in the node classification period. The second operation may also be referred to as resetting, by the electronic device, types of the multiple to-be-rendered nodes in the to-be-rendered interface at a current moment. The performing, by the electronic device, the second operation may be considered as resetting the types of the multiple to-be-rendered nodes to the first-type nodes.

In Embodiment 1, the first-type node includes a view node that does not change before a current moment in one node classification period, and the second-type node includes a view node that changes in the node classification period. In a current node classification period, the second-type node is an accumulation process. After a view node changes, the electronic device classifies the view node into the second-type node. Even if the view node does not change in a subsequent interface rendering process, the node still belongs to the second-type node.

In an optional implementation, when classifying the view nodes, the electronic device may add different labels to view nodes of different types, where the different labels may indicate different view node types. For example, the electronic device adds a first-type label to view nodes that do not change before a current moment in a node classification period, and classifies these view nodes as first-type nodes. The electronic device adds a second-type label to a view node that changes at least once before a current moment in the node classification period, and classifying the view node into the second-type node.

In another optional implementation, when classifying the view nodes, the electronic device may divide the multiple to-be-rendered view nodes into multiple sets, so that the multiple to-be-rendered view nodes are classified into multiple types. For example, the electronic device divides multiple to-be-rendered view nodes into a first set and a second set, where view nodes in the first set are first-type nodes, and view nodes in the second set are second-type nodes.

It should be noted that the foregoing manner of classifying the view nodes by the electronic device is merely an example rather than a limitation. This is not limited in this embodiment of this application.

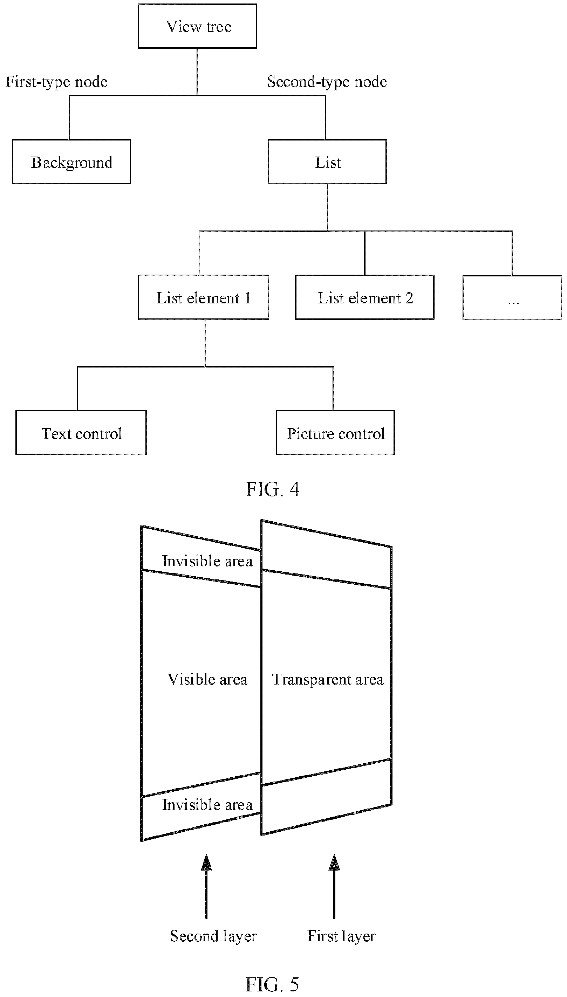

For example, FIG. 4 is a diagram of a structure of a view node according to an embodiment of this application. Referring to FIG. 4, multiple view nodes may be in a tree structure. If view nodes are not classified in an original view tree structure, it may be considered that all view nodes are of one type. In this embodiment of this application, when classifying the multiple view nodes, the electronic device may create a virtual branch, so as to classify view nodes in a same view tree into two types. As shown in FIG. 4, an original branch in the view tree is used as a first-type node. For example, a control corresponding to the first-type node includes a background. A newly created branch is used as a second-type node. For example, a second-type node includes a list, where the list may include multiple list elements (for example, a list element 1 and a list element 2 in FIG. 4), and each list element may include multiple view nodes. For example, the list element 1 includes a view node corresponding to a text control and a view node corresponding to an image control. The list may be, for example, content displayed on a social platform interface, each list element corresponds to a user activity, and the user activity may include a text and a picture shared by the user. In Embodiment 1 of this application, if the text control shown in FIG. 4 does not change in a subsequent update process, a view node corresponding to the text control still belongs to a second-type node.

It should be noted that in Embodiment 1 of this application, an example in which multiple view nodes are classified into a first-type node and a second-type node is used for description. In an implementation, more branches may be further created to classify the multiple view nodes into multiple types. This is not limited in this embodiment of this application.

After classifying the view nodes, the electronic device may retain a control corresponding to the first-type node at the first layer, and draw a control corresponding to the second-type node at the second layer. Optionally, after performing the view node classification operation, the electronic device determines that the target node changes from the first-type node to the second-type node. In this case, the electronic device may redraw an area corresponding to the target node at the first layer, for example, draw the area corresponding to the target node as a blank area or a transparent area, and then redraw, at the second layer, controls corresponding to all second-type nodes including the target node.

In an implementation, each time the interface is rendered, when the controls at the first layer are not increased or decreased, the electronic device may not process the first layer. The electronic device redraws the second layer each time when rendering the interface, and then the electronic device may synthesize the first layer and the second layer to obtain a frame of display interface.

Optionally, the electronic device may store a preset correspondence between a display scenario and a layer level, and the electronic device may determine a layer level of the first layer and a layer level of the second layer based on the display scenario and the preset correspondence between a display scenario and a layer level. For example, when the display scenario is a video playback scenario, the layer level may be that the first layer is located at an upper layer, and the second layer is located at a lower layer. When the display scenario is a sliding display scenario, the layer level may be that the first layer is located at a lower layer, and the second layer is located at an upper layer.

Optionally, if the first interface currently displayed by the electronic device includes one layer, for example, the first interface includes the first layer, and controls corresponding to the multiple view interfaces are all located at the first layer, the electronic device may create a second layer, where a size of the second layer may be the same as a screen size of the electronic device. For example, the electronic device may create a new SurfaceControl object, and request, by using the object, a SurfaceFlinger service to create a layer, where a length and a width of the layer are the same as a length and a width of a screen of the electronic device. It should be noted that, in specific implementation, the electronic device may further use one layer included in the first interface as the second layer, and create one layer as the first layer. This is not limited in this embodiment of this application.

For example, FIG. 5 is a diagram of a layer according to an embodiment of this application. Referring to FIG. 5, a control at a first layer is a control that has not changed, and a control at a second layer is a control that has changed. The electronic device may set a transparent region on each layer to adjust an occlusion relationship, and combine multiple layers to obtain a display interface.

It should be noted that, when drawing controls at a same layer, the electronic device may adjust an occlusion relationship between controls. However, an occlusion relationship between controls at different layers is related to a location of the layer, and an opaque control at an upper layer shields a control at a lower layer. Referring to FIG. 5, it may be found that when the electronic device arranges different controls at different layers, an occlusion relationship between the controls affects a final interface display effect. Therefore, after dividing the multiple view nodes into the first-type node and the second-type node, the electronic device may further adjust a type of the view node based on an occlusion relationship between controls, for example, adjust a type of a view node that is in the first-type node and that causes an occlusion error to the second-type node. For example, the electronic device determines that the view node A belongs to a first-type node, and when a control corresponding to the view node A is retained at the first layer, a control corresponding to the view node B at the second layer is occluded. In this case, the electronic device may adjust the view node A to a second-type node, and then the electronic device may draw, at the second layer based on an occlusion relationship between controls, a control corresponding to the view node A and a control corresponding to the view node B.

Optionally, it can be learned from the foregoing description that the electronic device may adjust a type of a view node to resolve an incorrect occlusion problem between controls. After the node type is adjusted, a quantity of view nodes that need to be redrawn at the second layer may increase. Therefore, when the electronic device determines that the quantity of view nodes redrawn at the second layer is greater than the first specified threshold, the electronic device may reset types of all view nodes after determining a to-be-rendered view node corresponding to a next-frame interface. In addition, all view nodes are redrawn on the same layer to initialize the rendering task and start a new node classification period. In a new node classification period, the electronic device further performs type division and control drawing on the view node according to the method provided in this embodiment of this application, thereby improving rendering efficiency. Optionally, the electronic device may draw, at the first layer or the second layer, all view nodes whose types are reset.

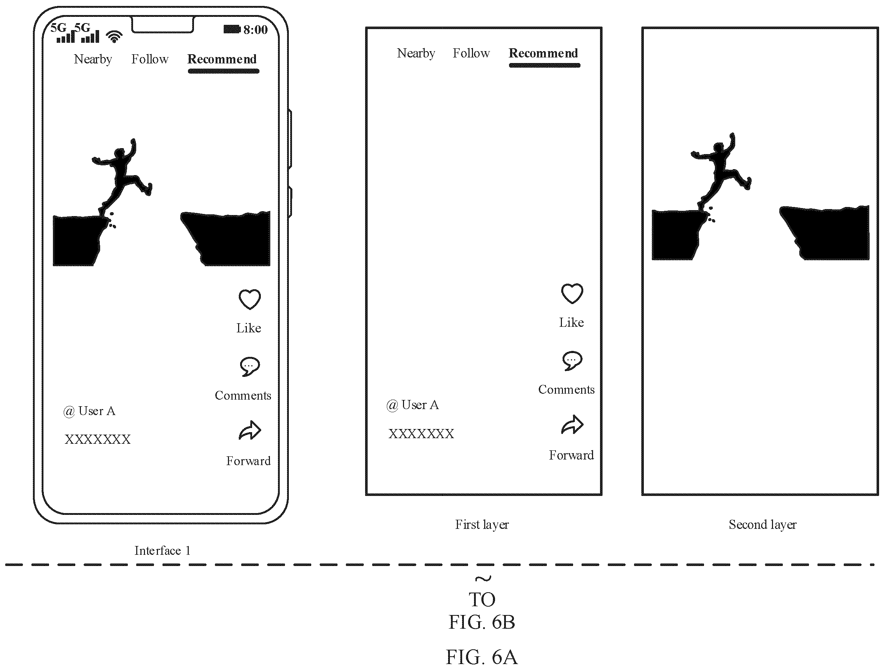

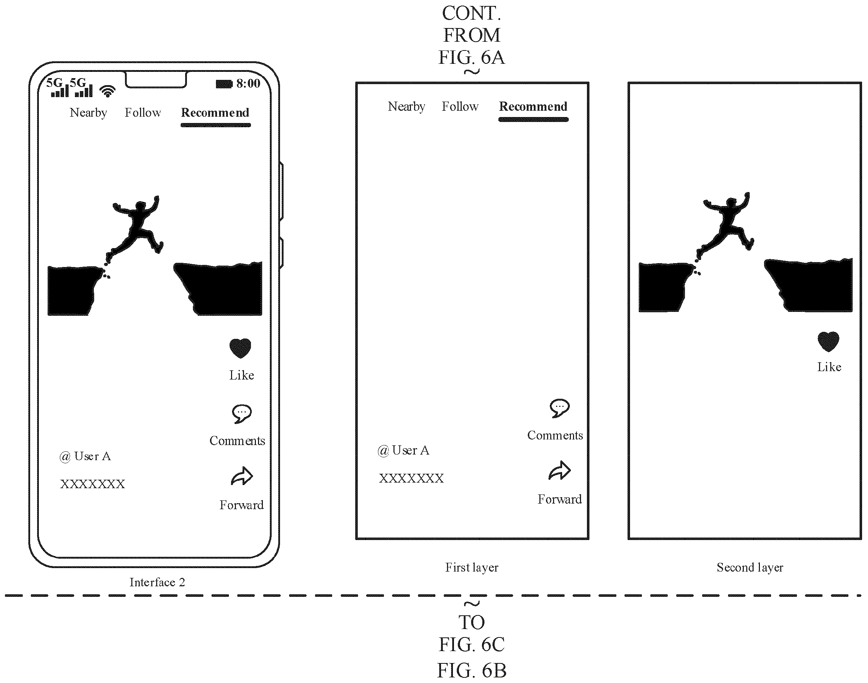

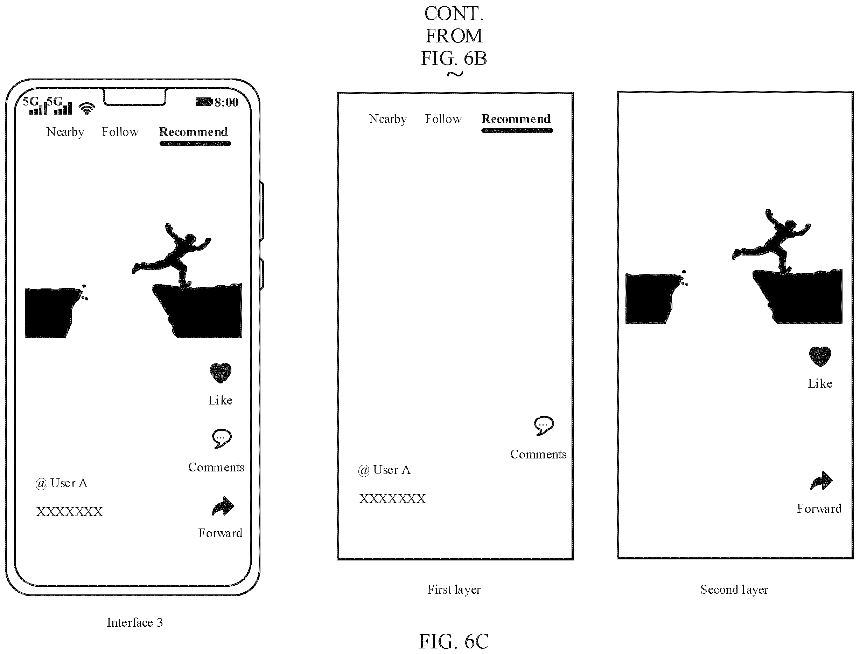

The following further describes the solution provided in Embodiment 1 of this application by using a video playback interface as an example. FIG. 6A to FIG. 6C are a diagram of a video playback interface according to an embodiment of this application. Referring to FIG. 6A to FIG. 6C, in the interface 1, view nodes corresponding to button controls such as "like", "forward", and "comments" are first-type nodes, and button controls such as "like", "forward", and "comments" are located at the first layer. Video content changes continuously. In this case, a view node corresponding to video content is a second-type node, and a video content control is located at the second layer. After the user taps the "like" control, when rendering the interface 2, the electronic device may determine that a view node corresponding to the "like" control changes. In this case, the view node corresponding to the "like" control is a second-type node. The electronic device draws an area corresponding to the "like" button control at the first layer as a blank area, and the electronic device draws the "like" control and the video content control at the second layer. After the user taps the "forward" button, when rendering the interface 3, the electronic device may determine that a view node corresponding to the "forward" control changes, and the view node corresponding to the "forward" control is a second-type node. The electronic device draws an area corresponding to the "forward" button control at the first layer as an empty table area, and draws the "like" and "forward" button controls and video content at the second layer.

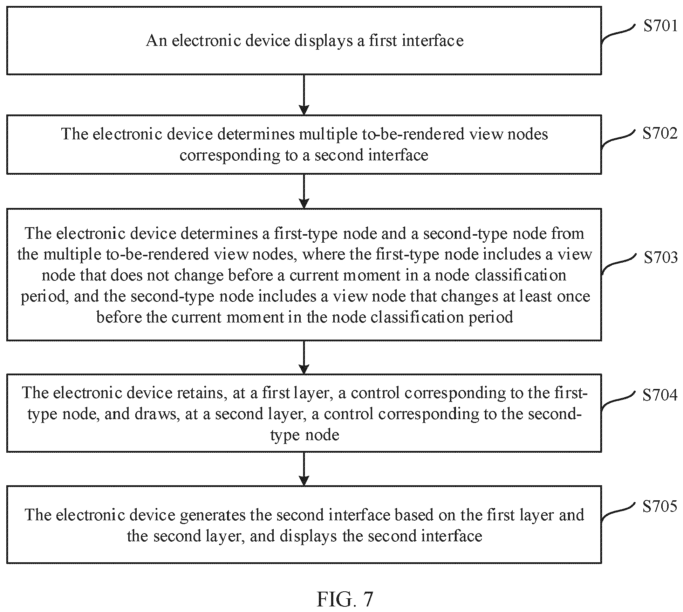

Based on this embodiment, this application further provides an interface rendering method. The method may be performed by an electronic device, and the electronic device may have a structure shown in FIG. 1 and/or FIG. 2. FIG. 7 is a flowchart of an interface rendering method according to an embodiment of this application. Refer to FIG. 7. The method includes the following steps.

S701. An electronic device displays a first interface.

The first interface displayed by the electronic device includes multiple controls corresponding to the multiple view nodes.

S702. The electronic device determines multiple to-be-rendered view nodes corresponding to the second interface.

The second interface is a next-frame interface of the first interface.

S703. The electronic device determines a first-type node and a second-type node from the multiple to-be-rendered view nodes, where the first-type node includes a view node that does not change before a current moment in one node classification period, and the second-type node includes a view node that changes at least once before the current moment in the node classification period.

Optionally, one node classification period includes multiple view node classification operations.

S704. The electronic device retains, at the first layer, a control corresponding to the first-type node, and draws, at the second layer, a control corresponding to the second-type node.

S705. The electronic device generates a second interface based on the first layer and the second layer, and displays the second interface.

It should be noted that, for specific implementation of the interface rendering method shown in FIG. 7 in this application, refer to the foregoing embodiments of this application, and details are not described again.

### Embodiment 2

The electronic device displays a first interface, where the first interface includes multiple controls corresponding to multiple view nodes. The electronic device updates multiple view nodes each time before rendering a next-frame interface, and controls corresponding to the multiple updated view nodes constitute the next-frame interface. For example, if a next-frame interface of the first interface is the second interface, controls corresponding to the multiple updated view nodes constitute the second interface. It may be understood that, in a display scenario, the electronic device updates the view node for multiple times, to render each frame of interface based on an updated view node.

The electronic device may determine multiple to-be-rendered view nodes corresponding to the second interface, and determine a first-type node and a second-type node from the multiple updated view nodes, where the first-type node includes a view node that does not change in an interface of a first preset quantity of frames before the second interface, and the second-type node includes a view node that changes at least once in an interface of a first preset quantity of frames before the second interface.

It should be noted that, when a view node of an interface changes, it may refer to a process in which a view node changes from the interface to a next-frame interface. For example, that the view node of the first interface changes means that the view node changes in a process of switching from the first interface to the second interface.

Optionally, the first preset quantity of frames is a positive integer. For example, when a value of the first preset quantity of frames is 1, it indicates that when performing a view node classification operation, the electronic device only needs to consider whether a view node of an interface of a current frame changes relative to a view node of an interface of a previous frame.

For example, the electronic device displays the first interface, where the first interface includes controls corresponding to the multiple view nodes. When rendering a next-frame interface (the second interface) of the first interface, the electronic device updates the multiple view nodes. If the electronic device determines that the rear view node A in this update does not change, the view node A belongs to a first-type node. If the electronic device determines that the rear view node B in this update changes, the view node B belongs to a second-type node. When rendering a next-frame interface (the third interface) of the second interface, the electronic device updates the multiple view nodes again. If the electronic device determines that the rear view node A in this update changes, the view node A belongs to a second-type node. If the electronic device determines that the rear view node B in this update does not change, the view node B belongs to a first-type node.

Optionally, a value of the first preset quantity of frames may be further greater than 1, indicating that when performing a view node classification operation, the electronic device needs to compare whether a view node changes in an interface of a first preset quantity of frames before the second interface. If a view node does not change in an interface of a first preset quantity of frames before the second interface, it may be determined that the view node is not a first-type node. If the view node changes at least once in an interface of a first preset quantity of frames before the second interface, in this case, it may be determined that the view node is a second-type node. In other words, when a value of the first preset quantity of frames is greater than a value of 1, and a view node does not change in an interface of the first preset quantity of consecutive frames, a type of the view node is a first-type node.

It should be noted that, when the value of the first preset quantity of frames is greater than 1, In an implementation, when the electronic device performs a view node classification operation on a view node in the second interface, if a view node is located at the first layer in the first interface, that is, the view node belongs to the first-type node in the first interface, the electronic device only needs to consider whether the view node in the second interface changes compared with that in the first interface, because the view node that belongs to the first-type node in the interface of the previous frame already meets the condition that the view node does not change in the interface of the first preset quantity of frames. Specifically, in a process in which the first interface is switched to the second interface, if the view node changes, the view node belongs to the second-type node in the second interface; if the view node does not change, the view node belongs to the first-type node in the second interface.

If a view node belongs to a second-type node in a previous frame interface, the electronic device needs to compare whether the view node changes in an interface of a first preset quantity of frames before the second interface. For example, when a value of the first preset quantity of frames is 5, a view node belongs to the second-type node in the first interface, and the view node does not change in a five-frame interface before the second interface, the electronic device determines that the view node is a first-type node in the second interface.

In an optional implementation, in a current display scenario, the electronic device may determine the type of the view node after rendering the interface of the second preset quantity of frames. Optionally, the electronic device may perform a first operation when determining that the quantity of frames of the rendered interface in the current display scenario reaches a second preset quantity of frames. The first operation includes: drawing, at a first layer, a control corresponding to a view node that does not change in the interface of the second preset quantity of frames, and drawing, at the second layer, a control corresponding to a view node that changes at least once in the interface of the second preset quantity of frames. Optionally, in this embodiment of this application, the first preset quantity of frames is less than or equal to the second preset quantity of frames. In this manner, in the current display scenario, the electronic device has rendered the interface of the second preset quantity of frames. It may be considered that a change of the current interface is relatively stable, and a view node that does not change may not change in subsequent multiple frames of interfaces. Based on the foregoing design, a view node classification operation is enabled to ensure a power consumption reduction benefit brought by the interface rendering method provided in this application.

It can be learned from the foregoing description that, in Embodiment 2 of this application, a type of a view node may change for multiple times between a first-type node and a second-type node. For example, a view node is a first-type node during one view node classification operation, and may be a second-type node during next view node classification. After the electronic device classifies the multiple to-be-rendered view nodes corresponding to the second interface, the first-type node may include a first node that is located at the first layer and that is in the first interface, and may further include a second node that is located at the second layer and that is in the first interface. In this case, the electronic device may retain a control corresponding to the first node at the first layer, and draw a control corresponding to the second node at the first layer. The electronic device may draw, at the second layer, a control corresponding to the second-type node.

Optionally, after the electronic device performs a view node classification operation once, if the type of the target node changes from the first-type node to the second-type node, the electronic device may redraw an area corresponding to the target node at the first layer, for example, draw the area corresponding to the target node as a blank area or a transparent area, and then redraw, at the second layer, controls corresponding to all second-type nodes including the target node. If the type of the target node changes from the second-type node to the first-type node, the electronic device may draw, in an area corresponding to the target node at the first layer, a control corresponding to the target node, and the electronic device draws, at the second layer, controls corresponding to all second-type nodes.

In an implementation, each time the interface is rendered, when the controls at the first layer are not increased or decreased, the electronic device may not process the first layer. The electronic device redraws the second layer each time when rendering the interface, and then the electronic device may synthesize the first layer and the second layer to obtain a frame of display interface.

In an optional implementation of this application, the electronic device may store a preset correspondence between a display scenario and a layer level. The electronic device may determine a layer of the first layer and a layer of the second layer based on the display scenario and the preset correspondence between a display scenario and a layer level, combine the first layer and the second layer according to a relationship between the first layer and the second layer, to obtain a second interface, and display the second interface.

In addition, for a data structure (the tree structure shown in FIG. 4) of the view node, a manner in which the electronic device creates a layer, and a manner in which the electronic device adjusts the type of the view node based on the occlusion relationship between controls corresponding to the view node, refer to the manner described in Embodiment 1. Details are not described herein again.

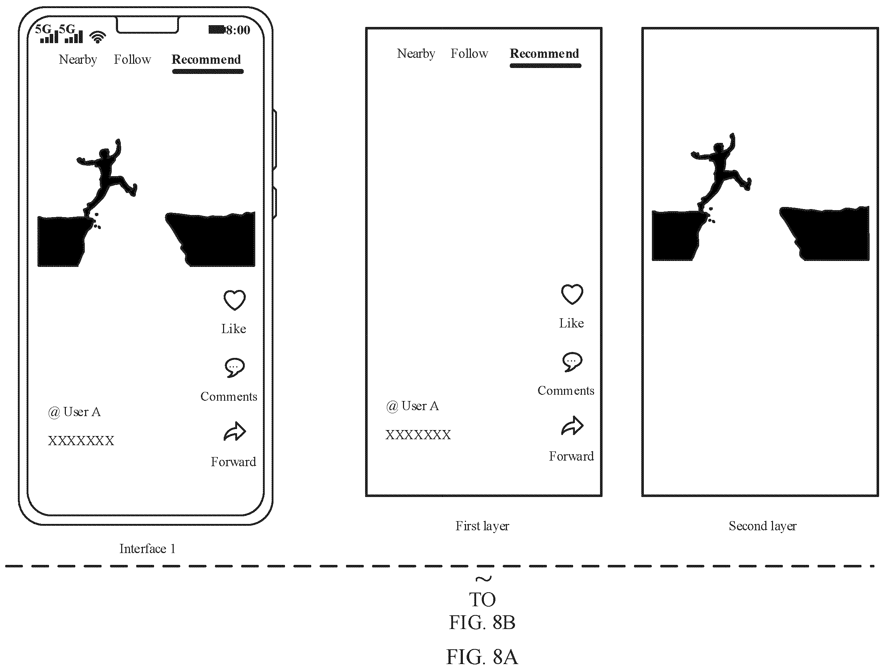

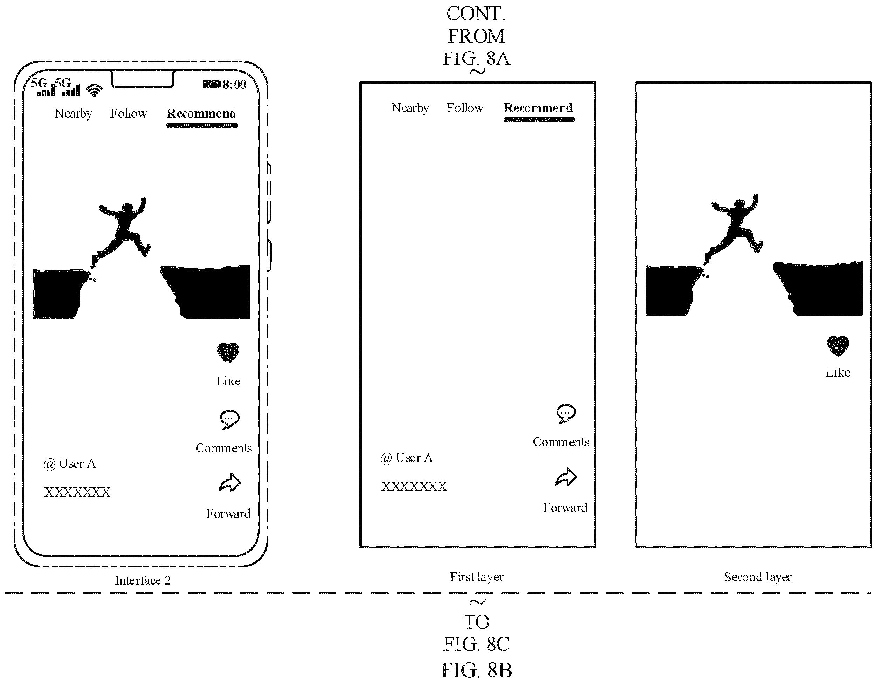

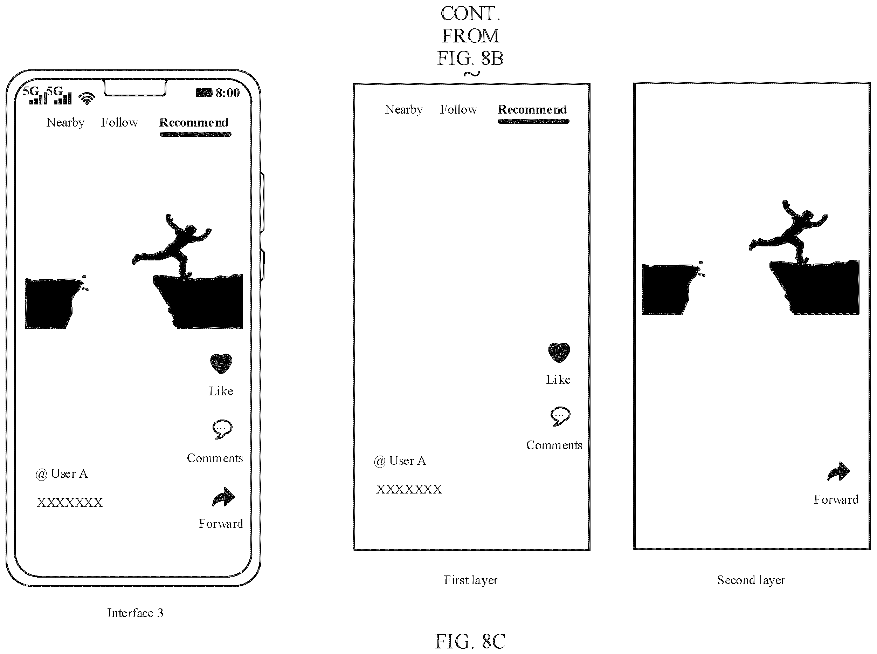

The following further describes the solution provided in Embodiment 2 of this application by using a video playback interface as an example. FIG. 8A to FIG. 8C are a diagram of a video playback interface according to an embodiment of this application. In FIG. 8A to FIG. 8C, an example in which the value of the first preset quantity of frames is 1 is used for description. Referring to FIG. 8A to FIG. 8C, in the view node classification operation corresponding to the interface 1, view nodes corresponding to button controls such as "like", "forward", and "comments" are first-type nodes, and the button controls such as "like", "forward", and "comments" are located at the first layer, and view nodes corresponding to video content are second-type nodes, and the video content control is located at the second layer. After the user taps the "like" control, when rendering the interface 2, a view node corresponding to the "like" button control changes. The electronic device may determine that in a view node classification operation corresponding to the interface 2, a view node corresponding to the "like" button control is a second-type node. The electronic device draws an area corresponding to the "like" button control at the first layer as a blank area, and draws the "like" button control and the video content control at the second layer. After the user taps the "forward" button, when the interface 3 is rendered, a view node corresponding to the "forward" button control changes. The electronic device may determine that in a view node classification operation corresponding to the interface 3, a view node corresponding to the "forward" button control is a second-type node. The electronic device draws an area corresponding to the "forward" button control at the first layer as a blank area, and draws the "forward" button control and video content at the second layer. However, in the view node classification operation corresponding to the interface 3, a view node corresponding to the "like" button control is a first-type node. In this case, the electronic device may partially draw the "like" button control on an area corresponding to the "like" button control at the first layer.

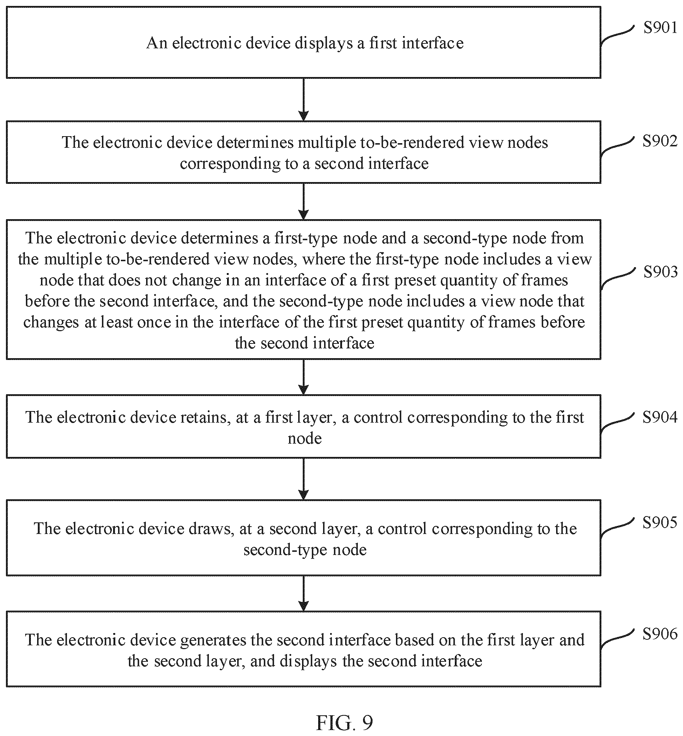

Based on this embodiment, this application further provides an interface rendering method. The method may be performed by an electronic device, and the electronic device may have a structure shown in FIG. 1 and/or FIG. 2. FIG. 9 is a flowchart of an interface rendering method according to an embodiment of this application. Refer to FIG. 9. The method includes the following steps.

S901. An electronic device displays a first interface.

The first interface displayed by the electronic device includes multiple controls corresponding to the multiple view nodes.

S902. The electronic device determines multiple to-be-rendered view nodes corresponding to the second interface.

The second interface is a next-frame interface of the first interface.

S903. The electronic device determines a first-type node and a second-type node from multiple to-be-rendered view nodes, where the first-type node includes a view node that does not change in an interface of a first preset quantity of frames before the second interface, and the second-type node includes a view node that changes at least once in an interface of the first preset quantity of frames before the second interface.

S904. The electronic device retains a control corresponding to the first node at the first layer.

The first node is a view node that is in the first-type node and that is located at the first layer in the first interface.

S905. The electronic device draws, at the second layer, a control corresponding to the second-type node.

S906. The electronic device generates a second interface based on the first layer and the second layer, and displays the second interface.

It should be noted that, for specific implementation of the interface rendering method shown in FIG. 9 in this application, refer to the foregoing embodiments of this application, and details are not described again.

### Embodiment 3

The electronic device displays a first interface, where the first interface includes multiple controls corresponding to multiple view nodes. The electronic device updates multiple view nodes each time before rendering a next-frame interface, and controls corresponding to the multiple updated view nodes constitute the next-frame interface. For example, if a next-frame interface of the first interface is a third interface, controls corresponding to the multiple updated view nodes constitute the third interface. It may be understood that if the electronic device needs to render multiple frames of interfaces in one display task, the view node is updated for multiple times in one display task.

The electronic device may determine multiple to-be-rendered view nodes corresponding to the second interface, and determine the first-type node, the second-type node, and the third-type node from the multiple to-be-rendered view nodes. The first-type node includes a view node that does not change before a current moment in a node classification period. The second-type node includes a view node whose drawing instruction changes at least once before the current moment in the node classification period. The third-type node includes a view node whose drawing instruction does not change and whose display location changes before the first view node classification operation in the node classification period. The current moment is a moment at which the multiple to-be-rendered view nodes in the second interface are determined.

Optionally, in this embodiment of this application, one node classification period includes at least one view node classification operation. In one node classification period, the electronic device may perform at least one view node classification operation based on the foregoing view node classification operation manner.

In this embodiment of this application, a start point of a node classification period may be a moment at which a quantity of second-type nodes in a previous node classification period is greater than a first specified threshold, or a start point of a node classification period may be a moment at which a 1^{st}-frame interface is rendered in a current display scenario, or a start point of a node classification period may be a moment at which a ratio of a visible area to a screen at a third layer after a location is adjusted in a previous node classification period is less than a second specified threshold. An end point of a node classification period may be a moment at which a quantity of second-type nodes in the node classification period is greater than a first specified threshold, or an end point of the node classification period may be a moment at which a ratio of a visible area to a screen at a third layer after a location is adjusted in the node classification period is less than a second specified threshold.

It can be learned from the foregoing view node classification method that, in this embodiment of this application, a second-type node in a node classification period is an accumulation process. When a quantity of second-type nodes is greater than a first specified threshold, a current node classification period may be ended and a next node classification period may be started, so as to prevent an excessive quantity of second-type nodes from affecting rendering efficiency. In this embodiment of this application, the electronic device may adjust a location of the third layer based on a sliding operation of the user. When a screen ratio of a visible area at the third layer to a screen is less than a second specified threshold, the electronic device may end a current node classification period and start a next node classification period, to prevent rendering efficiency from being affected by an excessive quantity of nodes that need to be redrawn.

Optionally, assuming that in a node classification period, the electronic device determines that a quantity of second-type nodes in the multiple to-be-rendered view nodes corresponding to the fifth interface is greater than a first specified threshold, or the electronic device determines that a ratio of a visible area to a screen at a third layer after the location is adjusted in the fifth interface is less than a second specified threshold, the electronic device may use the fifth interface as a 1^{st}-frame interface of a next node classification period.

In an optional implementation, when determining that a current moment reaches a start point of a node classification period, the electronic device may perform a first operation. The first operation may include: drawing, on a third layer, controls corresponding to multiple to-be-rendered view nodes corresponding to the third interface.

After the electronic device performs the first operation, the electronic device determines multiple to-be-rendered view nodes corresponding to a fourth interface, where the fourth interface is a next-frame interface of the third interface. The electronic device may perform a second operation, and the second operation may include: drawing, at the first layer, a view node that does not change compared with the third interface and that is in the multiple to-be-rendered view nodes corresponding to the fourth interface, drawing, at the second layer, a view node that is changed compared with the third interface drawing instruction and that is in the multiple to-be-rendered view nodes corresponding to the fourth interface, and retaining, at the third layer, a view node that does not change compared with the third interface drawing instruction and whose display location is changed and that is in the multiple to-be-rendered view nodes corresponding to the fourth interface. By performing the second operation, the electronic device may separately retain controls corresponding to the multiple view nodes to the third layer, or "move" the controls to the first layer and the second layer.

It can be learned that a difference between Embodiment 3 and Embodiment 1 lies in that, the electronic device classifies a node whose display location changes after the first view node is updated but whose drawing instruction does not change into a third-type node, and a control corresponding to this type of node changes only a location on a display interface. In this case, the electronic device only needs to adjust a location of a layer, and does not need to redraw the third-type node.

The electronic device may retain a control corresponding to the first-type node at the first layer, draw a control corresponding to the second-type node at the second layer, retain a control corresponding to the third-type node at the third layer, and adjust a location of the third layer according to the interface sliding distance.

In an optional implementation, the electronic device may mark the sliding control in the first interface, to obtain an original location of the sliding control. After the user triggers the sliding operation, the electronic device may obtain the updated location of the sliding control, so that the electronic device may determine the sliding distance according to the original location of the sliding control and the updated location of the sliding control, and adjust the location of the third layer according to the determined sliding distance.

In an implementation, each time the interface is rendered, when the controls at the first layer are not increased or decreased, the electronic device may not process the first layer. The electronic device redraws the second layer each time when rendering the interface, and adjusts a location of the third layer based on a sliding operation triggered by the user. Then, the electronic device may synthesize the first layer, the second layer, and the third layer to obtain a frame of display interface.

Optionally, the electronic device may further store a preset correspondence between a display scenario and a layer level. The electronic device may determine a layer relationship between the first layer, the second layer, and the third layer based on the display scenario and the preset correspondence between a display scenario and a layer level, and then perform synthesis processing at the first layer, the second layer, and the third layer according to the layer relationship between the first layer, the second layer, to generate the second interface, and display the second interface.

In addition, for a data structure (the tree structure shown in FIG. 4) of the view node, a manner in which the electronic device creates a layer, and a manner in which the electronic device adjusts the type of the view node based on the occlusion relationship between controls corresponding to the view node, refer to the manner described in Embodiment 1. Details are not described herein again.

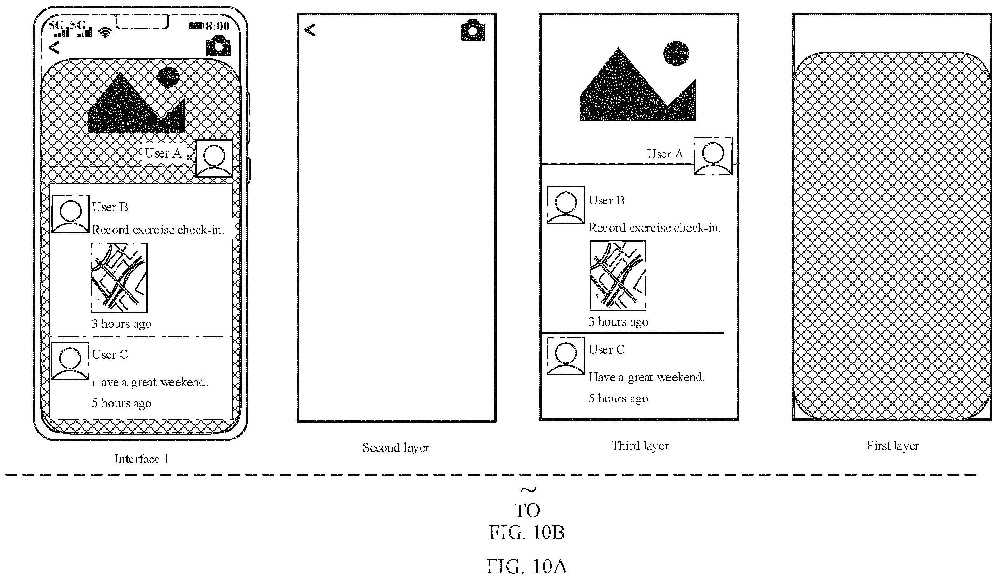

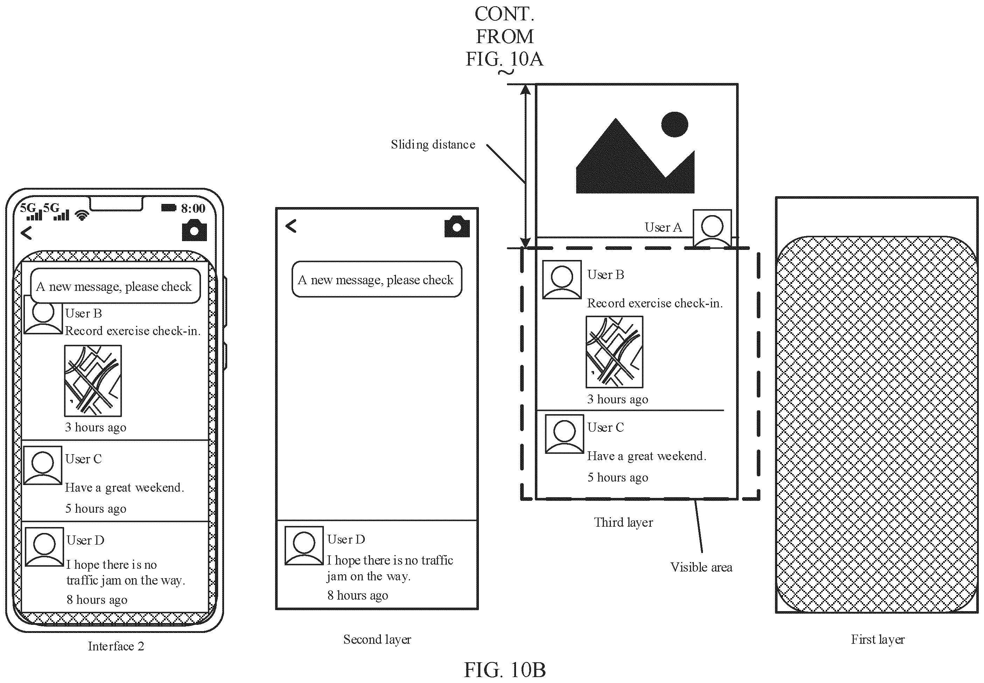

The following further describes the solution provided in Embodiment 3 of this application by using a display interface of a social platform as an example. FIG. 10A and FIG. 10B are a diagram of a display interface of a social platform according to an embodiment of this application. Referring to FIG. 10A and FIG. 10B, the display interface includes a background plate control, and the background plate control does not change in an interface display process. In this case, the electronic device may determine that a view node corresponding to the background plate control is a first-type node, and the background plate control is located at a first layer. Controls such as a button, a bubble, and a status bar in the display interface may change with the display of the interface. For example, after the user taps a button in the display interface, a drawing instruction of a view node corresponding to the button changes. For example, the view node includes a shape and a color of the button, and the user may trigger a color change of the button by tapping the button. The electronic device may classify view nodes corresponding to the return button control and the photographing button control in the interface into second-type nodes, and the return button control and the photographing button control are located at the second layer. A display location of a list (user activity) in the display interface changes with a sliding operation triggered by the user, but a drawing instruction of a list node does not change. For example, the drawing instruction of the list node includes text content and a picture of the user activity. In the interface 1 shown in FIG. 10A and FIG. 10B, a drawing instruction of a list node corresponding to the user activity of the user B includes an identifier and a profile picture of the user B, and text content and a picture of "recording motion clocking" and a time when the user B publishes a dynamic. The electronic device may use a view node corresponding to the list as a third-type node, and the list control is located at the third layer.

The electronic device determines, based on a current display scenario and a stored layer-level relationship between a display scenario and an image, that the second layer is located at an uppermost layer, the third layer is located at a middle layer, and the first layer is located at a lowermost layer. The electronic device may combine the three layers according to the layer relationship, to generate and display the interface 1.

After the user triggers the sliding operation, if the first layer does not change when the interface 2 is rendered, the electronic device does not process the first layer. The electronic device marks a location of the sliding control, determines a sliding distance by calculating a location change of the sliding control after the user triggers the sliding operation, and adjusts a location of the third layer according to the determined sliding distance. For example, a visible area at the third layer after the location of the third layer is adjusted is an area in a dashed box. A bubble control is newly added to the interface 2. For example, the bubble control is "a new message, please check" in the interface 2 of FIG. 10A and FIG. 10B. A view node corresponding to the bubble control is a second-type node, and a view node corresponding to the newly added list element (user activity of the user D) in the interface 2 is also a second-type node. In this case, the electronic device draws the return button control, the photographing button control, the bubble control, and the newly added list element at the second layer.

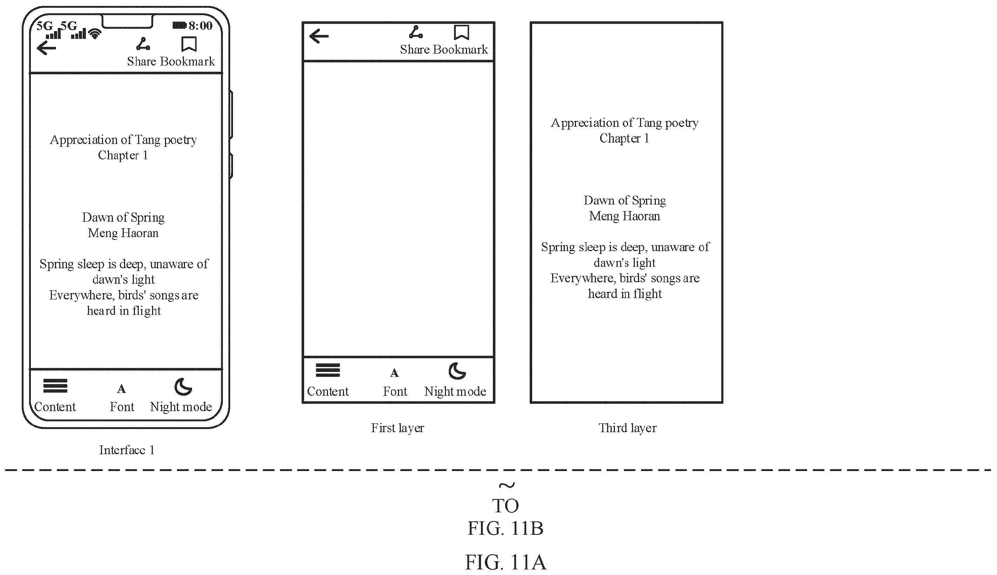

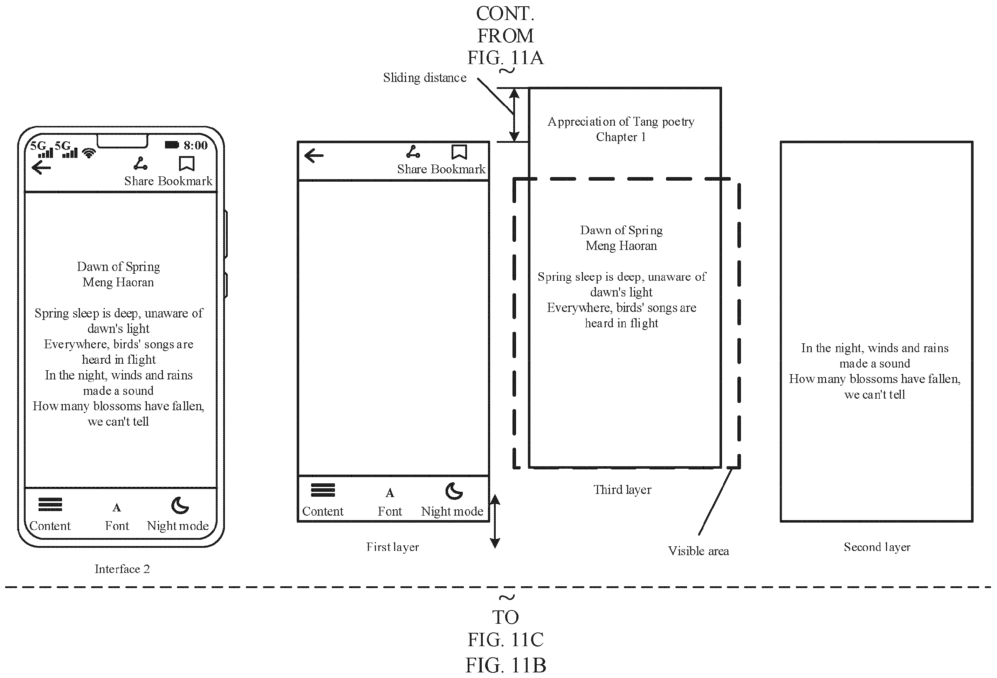

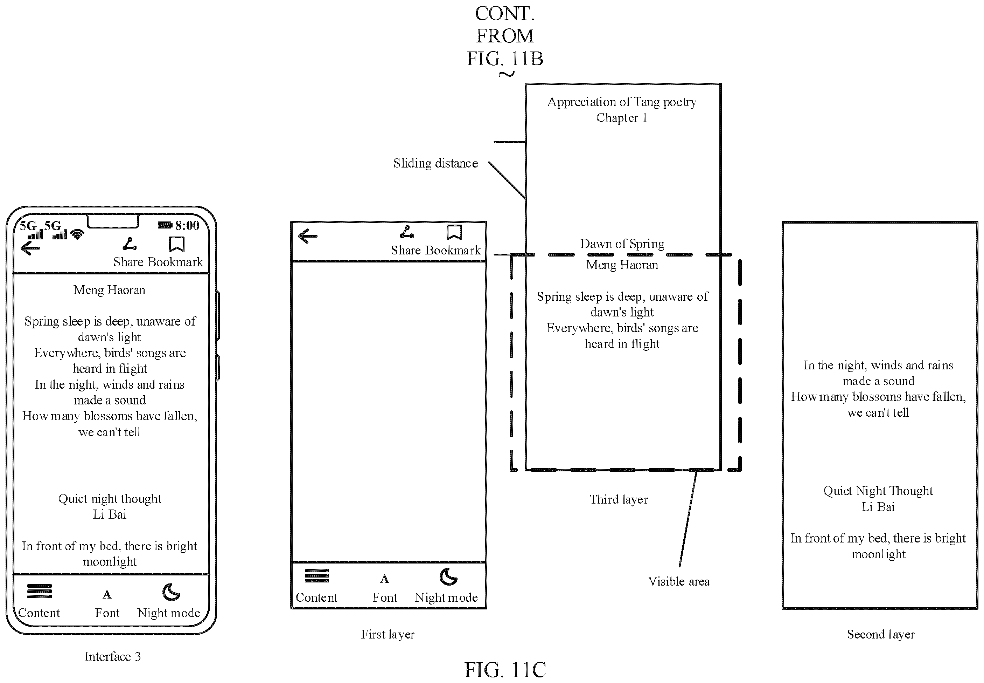

The following further describes the solution provided in Embodiment 3 of this application by using a document display interface as an example. FIG. 11A to FIG. 11C are a diagram of a document display interface according to an embodiment of this application. Referring to FIG. 11A to FIG. 11C, in an interface 1, button controls such as "share", "add a bookmark", "content", "font", and "night mode" on a toolbar at the top and bottom of the interface do not change in a document display process, and view nodes corresponding to these button controls are first-type nodes, and these button controls are located at a first layer. The location of the text content in the interface 1 changes with the sliding operation triggered by the user. In this case, a view node corresponding to the control of the text content is a third-type node, and the control of the text content is located at the third layer.

Optionally, in the example shown in FIG. 11A to FIG. 11C, one view node may be corresponding to one line of text content. For example, in the interface 1, one view node is corresponding to text content of "Appreciation of Tang poetry", and another view node is corresponding to text content of "Chapter 1". Certainly, one view node may also correspond to multiple lines of text content. For example, one view node corresponds to two lines of text content "Dawn of Spring Meng Haoran". In specific implementation, one view node may correspond to one or more rows of text content. This is not limited in this embodiment of this application.

After the user triggers the sliding operation, when the interface 2 is rendered, each button control at the first layer does not change, and the electronic device does not need to process the first layer. The electronic device marks a location of the sliding control, determines a sliding distance by calculating a location change of the sliding control after the user triggers the sliding operation, and adjusts a location of the third layer according to the determined sliding distance. For example, a visible area at the third layer after the location of the third layer is adjusted is an area in a dashed box. The electronic device creates a second layer, and draws a control of newly added text content at the second layer. For example, if a view node whose drawing instruction changes in the interface 2 relative to the interface 1 is a view node corresponding to text content of "in the night, winds and rains made a sound; how many blossoms have fallen, we can't tell", and the drawing instruction of the view node changes to a change of text content of "in the night, winds and rains made a sound; how many blossoms have fallen, we can't tell", the electronic device may determine that the view node is a second-type node.

The electronic device determines, based on a current display scenario and a stored layer-level relationship between a display scenario and an image, that the first layer is located at an uppermost layer, the third layer is located at a middle layer, and the second layer is located at a lowermost layer. The electronic device may combine the three layers according to the layer relationship, to generate and display the interface 2.

After the user triggers the sliding operation again, when rendering the interface 3, the control at the first layer remains unchanged, and the electronic device determines the sliding distance again based on the location change of the sliding control, and adjusts the location of the third layer based on the sliding distance. The electronic device draws, at the second layer, a control corresponding to a view node whose instruction changes after the view node is updated twice. Because a second-type node in a node classification period in Embodiment 3 of this application is an accumulation process, a view node corresponding to the text content "in the night, winds and rains made a sound; how many blossoms have fallen, we can't tell" whose drawing instruction changes in the interface 2 relative to the interface 1 is still the second-type node. A view node whose drawing instruction changes in the interface 3 relative to the interface 2 is a view node corresponding to text content of "Quiet night thought Li Bai In front of my bed, there is bright moonlight". In this case, the electronic device determines that the view node corresponding to the text content of "Quiet night thought Li Bai In front of my bed, there is bright moonlight" is a second-type node. In the interface 3 shown in FIG. 11A to FIG. 11C, the electronic device draws a control corresponding to the second-type node at the second layer.

The electronic device may combine the three layers according to a layer relationship between the first layer, the second layer, and the third layer, to generate and display the interface 3.

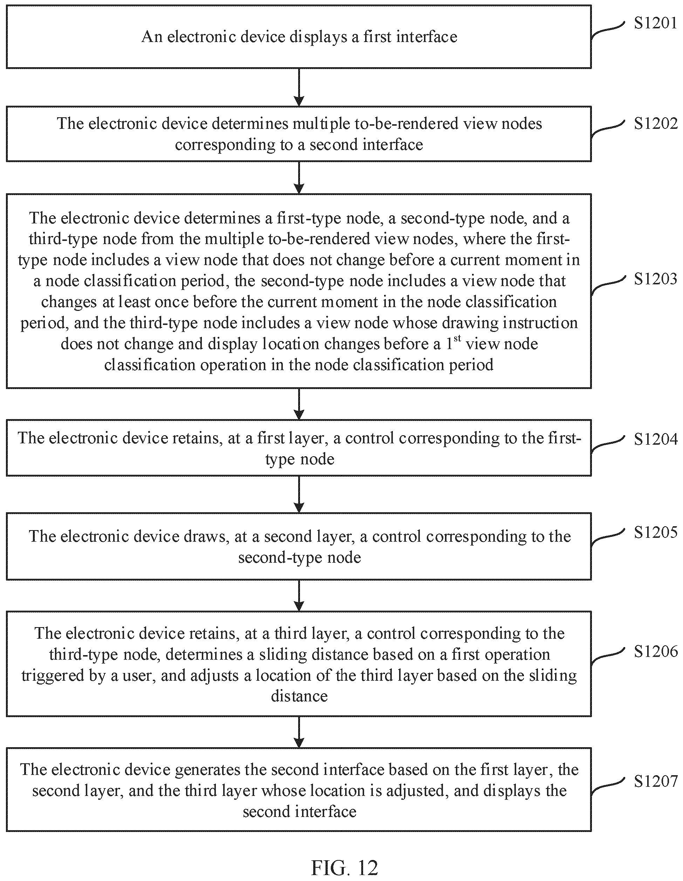

Based on this embodiment, this application further provides an interface rendering method. The method may be performed by an electronic device, and the electronic device may have a structure shown in FIG. 1 and/or FIG. 2. FIG. 12 is a flowchart of an interface rendering method according to an embodiment of this application. With reference to FIG. 12, the method includes the following steps.

S1201. An electronic device displays a first interface.

The first interface displayed by the electronic device includes multiple controls corresponding to the multiple view nodes.

S1202. The electronic device determines multiple to-be-rendered view nodes corresponding to the second interface.

The second interface is a next-frame interface of the first interface.

S1203. The electronic device determines a first-type node, a second-type node, and a third-type node from multiple to-be-rendered view nodes, where the first-type node includes a view node that does not change before a current moment in a node classification period, the second-type node includes a view node on which a drawing instruction changes at least once before the current moment in the node classification period, and the third-type node includes a view node on which a drawing instruction does not change and a display location changes before the first view node classification period.

Optionally, one node classification period includes multiple view node classification operations.

S1204. The electronic device retains, at the first layer, a control corresponding to the first-type node.

S1205. The electronic device draws, at the second layer, a control corresponding to the second-type node.

S 1206. The electronic device retains, at the third layer, a control corresponding to the third-type node, determines a sliding distance based on a first operation triggered by the user, and adjusts a location of the third layer according to the sliding distance.

S 1207. The electronic device generates a second interface based on the first layer, the second layer, and the third layer whose location is adjusted, and displays the second interface.

It should be noted that, for specific implementation of the interface rendering method shown in FIG. 12 in this application, refer to the foregoing embodiments of this application, and details are not described again.

It may be understood that an objective of the interface rendering method provided in the foregoing embodiments of this application is to reduce a drawing amount when the electronic device renders an interface. When the electronic device renders an interface based on the solutions provided in the foregoing embodiments, if the electronic device determines that a benefit (for example, a degree of reducing a drawing amount) brought by a currently executed solution is relatively low, for example, in Embodiment 1, when the electronic device determines that a quantity of view nodes redrawn at the second layer is greater than a specified threshold, the electronic device may temporarily disable the solution, the rendering task is initialized by drawing all view nodes on a layer. After the view nodes are updated next time, the solution is enabled again to improve the rendering efficiency.

Based on the foregoing embodiments, this application further provides an electronic device. The electronic device includes multiple function modules. The multiple function modules interact with each other to implement functions performed by the electronic device in the methods described in embodiments of this application. For example, the steps performed by the electronic device in the embodiment shown in FIG. 7, FIG. 9, or FIG. 12 are performed. The multiple function modules may be implemented based on software, hardware, or a combination of software and hardware, and the multiple function modules may be randomly combined or divided based on specific implementation.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, the steps performed by the electronic device in the embodiment shown in FIG. 7, FIG. 9, or FIG. 12 are performed.

Based on the foregoing embodiments, this application further provides a computer program product including instructions. When the computer program product runs on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. An interface rendering method, wherein the method is applied to an electronic device, and the method comprises:
displaying a first interface, wherein the first interface comprises multiple controls corresponding to multiple view nodes;
determining multiple to-be-rendered view nodes corresponding to a second interface, wherein the second interface is a next-frame interface of the first interface;
determining a first-type node and a second-type node from the multiple to-be-rendered view nodes, wherein the first-type node comprises a view node that does not change before a current moment in a node classification period, the second-type node comprises a view node that changes at least once before the current moment in the node classification period, and the node classification period comprises at least one view node classification operation;
retaining, at a first layer, a control corresponding to the first-type node, and drawing, at a second layer, a control corresponding to the second-type node; and
generating the second interface based on the first layer and the second layer, and displaying the second interface.

2. The method according to claim 1, wherein a start point of the node classification period is a moment at which a quantity of second-type nodes in a previous node classification period of the node classification period is greater than a first specified threshold, or a start point of the node classification period is a moment at which a 1^{st}-frame interface is rendered in a current scenario, and an end point of the node classification period is a moment at which a quantity of second-type nodes in the node classification period is greater than the first specified threshold.

3. The method according to claim 2, wherein the method further comprises:
determining that a quantity of frames for rendering an interface after the start point of the node classification period reaches a preset quantity of frames, and performing a first operation, wherein
the first operation comprises: drawing, at the first layer, a control corresponding to a view node that does not change in an interface of the preset quantity of frames, and drawing, at the second layer, a control corresponding to a view node that changes at least once in the interface of the preset quantity of frames.

4. The method according to claim 2, wherein the method further comprises:
determining that the current moment reaches the start point of the node classification period, and performing a second operation, wherein
the second operation comprises: drawing, at the first layer, controls corresponding to multiple to-be-rendered view nodes corresponding to a to-be-rendered interface at the current moment.

5. The method according to any one of claims 1 to 4, wherein the method further comprises:
determining that a type of a target node determined based on a current view node classification operation changes from the first-type node to the second-type node, and drawing an area corresponding to the target node at the first layer as a blank area or a transparent area, wherein the target node is any one of the multiple to-be-rendered view nodes.

6. The method according to any one of claims 1 to 5, wherein the generating the second interface based on the first layer and the second layer comprises:
determining a hierarchical relationship between the first layer and the second layer based on a current display scenario; and
performing synthesis processing on the first layer and the second layer based on the hierarchical relationship between the first layer and the second layer to generate the second interface.

7. The method according to claim 6, wherein after the determining a first-type node and a second-type node from the multiple to-be-rendered view nodes, the method further comprises:
adjusting, based on an occlusion relationship between multiple controls corresponding to the multiple to-be-rendered view nodes and the hierarchical relationship between the first layer and the second layer, a type of a view node that causes an occlusion error in the first-type node to the second-type node.

8. The method according to claim 3, wherein before the drawing, at the second layer, a control corresponding to a view node that changes at least once in the interface of the preset quantity of frames, the method further comprises:
creating the second layer, wherein a size of the second layer is the same as a screen size of the electronic device.

9. The method according to any one of claims 1 to 8, wherein after the displaying the second interface, the method further comprises:
after determining multiple to-be-rendered view nodes corresponding to a third interface, and performing a view node classification operation on the multiple to-be-rendered view nodes corresponding to the third interface, determining that a quantity of second-type nodes in the multiple to-be-rendered view nodes corresponding to the third interface is greater than the first specified threshold, ending the node classification period, and using the third interface as a 1^{st}-frame interface of a next node classification period of the node classification period, wherein the third interface is a next-frame interface of the second interface.

10. An interface rendering method, wherein the method is applied to an electronic device, and the method comprises:
displaying a first interface, wherein the first interface comprises multiple controls corresponding to multiple view nodes;
determining multiple to-be-rendered view nodes corresponding to a second interface, wherein the second interface is a next-frame interface of the first interface;
determining a first-type node and a second-type node from the multiple to-be-rendered view nodes, wherein the first-type node comprises a view node that does not change in an interface of a first preset quantity of frames before the second interface, and the second-type node comprises a view node that changes at least once in the interface of the first preset quantity of frames before the second interface;
retaining, at the first layer, a control corresponding to a first node in the first-type node, wherein the first node is located at the first layer in the first interface;
drawing, at a second layer, a control corresponding to the second-type node; and
generating the second interface based on the first layer and the second layer, and displaying the second interface.

11. The method according to claim 10, wherein the first-type node comprises a second node located at the second layer in the first interface, and before the generating the second interface based on the first layer and the second layer, the method further comprises:
drawing, at the first layer, a control corresponding to the second node.

12. The method according to claim 10 or 11, wherein the method further comprises:
determining that a quantity of frames for rendering an interface in a current display scenario reaches a second preset quantity of frames, and performing a first operation, wherein
the first operation comprises: drawing, at the first layer, a control corresponding to a view node that does not change in an interface of the second preset quantity of frames, and drawing, at the second layer, a control corresponding to a view node that changes at least once in the interface of the second preset quantity of frames.

13. The method according to any one of claims 10 to 12, wherein the method further comprises:
determining that a type of a target node determined based on a current view node classification operation changes from the first-type node to the second-type node, and drawing an area corresponding to the target node at the first layer as a blank area or a transparent area, wherein the target node is any one of the multiple to-be-rendered view nodes.

14. The method according to any one of claims 10 to 13, wherein the generating the second interface based on the first layer and the second layer comprises:
determining a hierarchical relationship between the first layer and the second layer based on the current display scenario; and
performing synthesis processing on the first layer and the second layer based on the hierarchical relationship between the first layer and the second layer to generate the second interface.

15. The method according to claim 14, wherein after the determining a first-type node and a second-type node from the multiple to-be-rendered view nodes, the method further comprises:
adjusting, based on an occlusion relationship between multiple controls corresponding to the multiple to-be-rendered view nodes and the hierarchical relationship between the first layer and the second layer, a type of a view node that causes an occlusion error in the first-type node to the second-type node.

16. The method according to claim 12, wherein before the drawing, at the second layer, a control corresponding to a view node that changes at least once in the interface of the second preset quantity of frames, the method further comprises:
creating the second layer, wherein a size of the second layer is the same as a screen size of the electronic device.

17. An interface rendering method, wherein the method is applied to an electronic device, and the method comprises:
displaying a first interface, wherein the first interface comprises multiple controls corresponding to multiple view nodes;
determining multiple to-be-rendered view nodes corresponding to a second interface, wherein the second interface is a next-frame interface of the first interface;
determining a first-type node and a second-type node from the multiple to-be-rendered view nodes, wherein the first-type node comprises a view node that does not change before a current moment in a node classification period, the second-type node comprises a view node whose drawing instruction changes at least once before the current moment in the node classification period, and the node classification period comprises at least one view node classification operation;
retaining, at a first layer, a control corresponding to the first-type node;
drawing, at a second layer, a control corresponding to the second-type node; and
generating the second interface based on the first layer and the second layer, and displaying the second interface.

18. The method according to claim 17, wherein the method further comprises:
determining a third-type node from the multiple to-be-rendered view nodes, wherein the third-type node comprises a view node whose drawing instruction does not change and display location changes before a 1^{st} view node classification operation in the node classification period;
retaining, at a third layer, a control corresponding to the third-type node, determining a sliding distance based on a first operation triggered by a user, and adjusting a location of the third layer based on the sliding distance; and
the generating the second interface based on the first layer and the second layer comprises:
generating the second interface based on the first layer, the second layer, and the third layer whose location is adjusted.

19. The method according to claim 18, wherein a start point of the node classification period is a moment at which a quantity of second-type nodes in a previous node classification period of the node classification period is greater than a first specified threshold, or a start point of the node classification period is a moment at which a 1^{st}-frame interface is rendered in a current display scenario, or a start point of the node classification period is a moment at which a ratio of a visible area in a screen at the third layer whose location is adjusted is less than a second specified threshold in a previous node classification period of the node classification period, and an end point of the node classification period is a moment at which a quantity of second-type nodes in the node classification period is greater than the first specified threshold, or an end point of the node classification period is a moment at which a ratio of a visible area in the screen at the third layer whose location is adjusted is less than the second specified threshold in the node classification period.

20. The method according to claim 19, wherein the method further comprises:
determining that the current moment reaches the start point of the node classification period, and performing a first operation, wherein the first operation comprises: drawing, at the third layer, controls corresponding to multiple to-be-rendered view nodes corresponding to a third interface, and the third interface is a 1^{st}-frame interface of the node classification period; and
determining multiple to-be-rendered view nodes corresponding to a fourth interface, and performing a second operation, wherein the fourth interface is a next-frame interface of the third interface, and the second operation comprises: drawing, at the first layer, a view node that does not change compared with the third interface in multiple to-be-rendered view nodes corresponding to the fourth interface, drawing, at the second layer, a view node whose drawing instruction changes compared with the third interface in the multiple to-be-rendered view nodes corresponding to the fourth interface, and retaining, at the third layer, a view node whose drawing instruction does not change and display location changes compared with the third interface in the multiple to-be-rendered view nodes corresponding to the fourth interface.

21. The method according to any one of claims 18 to 20, wherein the determining a sliding distance based on a first operation triggered by a user comprises:
obtaining a first location of a sliding control in multiple controls corresponding to the multiple to-be-rendered view nodes at a first moment, and obtaining a second location of the sliding control at a second moment, wherein the first moment is a moment at which the electronic device detects that the first operation starts, and the second moment is a moment at which the electronic device detects that the first operation ends; and
determining the sliding distance based on the first location and the second location.

22. The method according to any one of claims 17 to 21, wherein the method further comprises:
determining that a type of a target node determined by a current view node classification operation changes from the first-type node to the second-type node, and drawing an area corresponding to the target node at the first layer as a blank area or a transparent area, wherein the target node is any one of the multiple to-be-rendered view nodes.

23. The method according to any one of claims 18 to 20, wherein the generating the second interface based on the first layer, the second layer, and the third layer comprises:
determining a hierarchical relationship between the first layer, the second layer, and the third layer based on the current display scenario; and
performing synthesis processing on the first layer, the second layer, and the third layer based on the hierarchical relationship between the first layer, the second layer, and the third layer to generate the second interface.

24. The method according to claim 23, wherein after the determining a first-type node, a second-type node, and a third-type node from the multiple to-be-rendered view nodes, the method further comprises:
adjusting, based on an occlusion relationship between the multiple controls corresponding to the multiple to-be-rendered view nodes and the hierarchical relationship between the first layer, the second layer, and the third layer, a type of a view node that causes an occlusion error in the first-type node to the second-type node, and adjusting a view node that causes an occlusion error in the third-type node to the second-type node.

25. The method according to claim 20, wherein before the drawing, at the second layer, a view node whose drawing instruction changes compared with the third interface in the multiple to-be-rendered view nodes corresponding to the fourth interface, the method further comprises:
creating the second layer, wherein a size of the second layer is the same as a screen size of the electronic device.

26. The method according to any one of claims 18 to 25, wherein after the displaying the second interface, the method further comprises:
after determining multiple to-be-rendered view nodes corresponding to a fifth interface, and performing a node classification operation on the multiple to-be-rendered view nodes corresponding to the fifth interface, determining that a quantity of second-type nodes in the multiple to-be-rendered view nodes corresponding to the fifth interface is greater than a first specified threshold, or determining that a ratio of a visible area at the third layer whose location is adjusted in the fifth interface in a screen is less than a second specified threshold, ending the node classification period, and using the fifth interface as a 1^{st}-frame interface of a next node classification period of the node classification period, wherein the fifth interface is a next-frame interface of the second interface.

27. An electronic device, comprising at least one processor, wherein the at least one processor is coupled to at least one memory, and the at least one processor is configured to read a computer program stored in the at least one memory, to perform the method according to any one of claims 1 to 9, perform the method according to any one of claims 10 to 16, or perform the method according to any one of claims 17 to 26.

28. An electronic device, comprising multiple function modules, wherein the multiple function modules interact with each other to perform the method according to any one of claims 1 to 9, perform the method according to any one of claims 10 to 16, or perform the method according to any one of claims 17 to 26.

29. A computer program product comprising instructions, wherein when the computer program product runs on a computer, the computer is enabled to perform the method according to any one of claims 1 to 9, perform the method according to any one of claims 10 to 16, or perform the method according to any one of claims 17 to 26.

30. A computer-readable storage medium, wherein the computer-readable storage medium stores instructions, and when the instructions are run on a computer, the computer is enabled to perform the method according to any one of claims 1 to 9, perform the method according to any one of claims 10 to 16, or perform the method according to any one of claims 17 to 26.
